# EUROPEAN PATENT SPECIFICATION

(11) **EP 4 036 894 B1**
(45) Date of publication and mention of the grant of the patent: **24.07.2024**
(21) Application number: 20866972.1
(22) Date of filing: 16.09.2020
(51) Int. Cl.: G09B 29/10, G08G 1/0969, G01C 21/34, B60L 3/00, B60L 58/12, B60L 53/10, B60L 53/80, G01C 21/36, G06Q 10/04, B60L 53/67, B60L 53/68

(54) **NAVIGATION SYSTEM, ROUTE SETTING DEVICE, ROUTE SETTING METHOD, PROGRAM, AND STORAGE MEDIUM**
NAVIGATIONSSYSTEM, ROUTENEINSTELLUNGSVORRICHTUNG, ROUTENEINSTELLUNGSVERFAHREN, PROGRAMM UND SPEICHERMEDIUM
SYSTÈME DE NAVIGATION, DISPOSITIF D'ÉTABLISSEMENT D'ITINÉRAIRE, PROCÉDÉ D'ÉTABLISSEMENT D'ITINÉRAIRE, PROGRAMME ET SUPPORT DE STOCKAGE

(30) Priority: 27.09.2019 JP 2019177693
(43) Date of publication of application: 03.08.2022
(73) Proprietor: HONDA MOTOR CO., LTD., Minato-ku Tokyo 107-8556 (JP)
(72) Inventor: FUJIWARA, Takao, Tokyo 107-8556 (JP); MITSUKAWA, Makoto, Tokyo 107-8556 (JP); OKUBO, Katsuyuki, Tokyo 107-8556 (JP); NAKAUCHI, Kota, Tokyo 107-8556 (JP); YOSHIDA, Hiroaki, Tokyo 107-8556 (JP); WATANABE, Naruaki, Tokyo 107-8556 (JP); FUJITSU, Shun, Tokyo 107-8556 (JP)
(74) Representative: Dehns
(86) International application number: PCT/JP2020/035125
(87) International publication number: WO 2021/060114

(56) References cited:
- EP-A1- 3 360 722
- WO-A1-2019/159475
- WO-A1-2019/159475
- CN-A- 107 264 326
- JP-A- 2002 296 041
- JP-A- 2011 075 291
- JP-A- H10 304 502
- JP-A- H10 304 502
- US-A- 5 790 976
- US-A1- 2016 114 784

## Description

### TECHNICAL FIELD

The present invention relates to a navigation system, a route setting device, a route setting method, a program, and a storage medium, and particularly to a technique capable of providing guidance to a charging station in consideration of a remaining battery capacity of each vehicle traveling in a group and providing guidance for a route to a destination without dispersing the group.

### BACKGROUND ART

PTL 1 discloses a navigation system that proposes a route in consideration of passing through a charging station according to a remaining battery capacity of a host vehicle.

### CITATION LIST

### PATENT LITERATURE

PTL 1: Japanese Patent Laid-Open No. 2013-210281

### SUMMARY OF INVENTION

### TECHNICAL PROBLEM

However, a technique of PTL 1 is based on the premise that the host vehicle travels alone, and it is necessary to set a route in consideration of a remaining battery capacity of another vehicle in a group as well as the remaining battery capacity of the host vehicle when a plurality of vehicles registered in advance as the group are guided to a destination along the route.

An object of the present invention is to provide a technique capable of providing guidance for a route to a destination via a charging station at which an electric vehicle having the shortest travelable distance can arrive in a case where power supply for a battery is necessary in consideration of a remaining battery capacity of each vehicle traveling in a group.

JP 2002 296041 A discloses a system in which a plurality of vehicles are registered as one group and position information is managed. US 5790976 A discloses a route selection apparatus for a motor vehicle with an energy storage device. WO 2019/159475 A1 discloses a control device which acquires information on a position of an electric vehicle in which a removable battery is installed and remaining battery life. JP H10 304502 A discloses calculation of a travel distance with a remaining capacity of a battery. CN 107264326 discloses a method for estimating the endurance mileage of an electric car. EP 3360722 A1 discloses a system for predicting the autonomy of a vehicle comprising a camera placed in proximity to each of the doors.

### SOLUTION TO PROBLEM

A navigation system according to a first aspect of the present invention is a navigation system comprising a plurality of electric vehicles respectively having batteries; and a route setting device that searches for a route for guiding the plurality of electric vehicles to a destination to set a travel route, wherein the route setting device includes:
a storage means for storing group information in which the plurality of electric vehicles are set as one group, pieces of position information of charging stations capable of supplying power to the batteries of the plurality of electric vehicles and at least one of weight data of each user who rides on the plurality of electric vehicles and information on past electricity consumption record of each user;
a calculation means for calculating a travelable distance of each electric vehicle based on remaining battery capacities acquired from the plurality of electric vehicles and at least one of the weight data of each user and the information on past electricity consumption record of each user;
a determination means for determining whether or not an electric vehicle having a shortest travelable distance among the plurality of electric vehicles can arrive at the destination by comparing a distance from the current location to the destination with the shortest travelable distance calculated by the calculation means; and
a travel guide means for searching the travel route for a charging station at which the electric vehicle having the shortest travelable distance is capable of arriving based on the pieces of position information of the charging stations and providing guidance for a route to the destination via the charging station when it is determined by determination process of the determination means that it is difficult for the electric vehicle having the shortest travelable distance to arrive at the destination.

Optionally, in the navigation system and according to a second aspect, a battery of each of the plurality of vehicles is capable of being charged or replaced with a charged battery in the charging station, and the charging station is a battery replacement station where charging of the battery or replacement of the battery is possible. The route setting device further includes an acquisition means for acquiring power information indicating a number or capacities of replacement batteries charged in each of the charging stations from a plurality of the charging stations arranged on a travel route based on the pieces of position information of the charging stations. The travel guide means selects a charging station with the power information exceeding a total number of batteries or a total remaining capacity of the batteries, required for the plurality of electric vehicles to arrive at the destination, from the plurality of charging stations and provides guidance for a route passing through the charging station.

Optionally, in the navigation system and according to a third aspect, a battery of each of the plurality of vehicles is capable of being charged or replaced with a charged battery in the charging station, and the charging station is a battery replacement station where charging of the battery or replacement of the battery is possible. The route setting device further includes an acquisition means for acquiring power information indicating a number or capacities of replacement batteries charged in each of the charging stations from a plurality of the charging stations arranged on a travel route based on the pieces of position information of the charging stations. When the power information is below a total number of batteries or a total remaining capacity of the batteries required for the plurality of electric vehicles to arrive at the destination, the travel guide means provides guidance for a route passing through a plurality of charging stations selected such that a sum of pieces of the power information exceeds the total number of the batteries or the total remaining capacity of the batteries.

Optionally, in the navigation system and according to a fourth aspect, the travel guide means provides guidance for a sequence of replacing the batteries in the plurality of selected charging stations based on a comparison between the travelable distance of each of the electric vehicles and a number or capacities of replacement batteries charged in each of the selected charging stations.

Optionally, in the navigation system and according to a fifth aspect, the travel guide means sets a higher priority in ascending order of the travelable distance among the plurality of electric vehicles and determines the sequence of replacing the batteries.

Optionally, in the navigation system and according to a sixth aspect, the storage means stores schedule information, which indicates a power supply schedule in the charging station, for each group, and the travel guide means refers to the schedule information to search the travel route for a charging station different from a charging station scheduled for supply to another group, and provides guidance for a route to the destination via the searched charging station.

Optionally, in the navigation system and according to a seventh aspect, the storage means stores information on a past electricity consumption record of a user riding on each electric vehicle, and the calculation means refers to the information on the electricity consumption record to calculate the travelable distance.

A route setting device according to an eighth aspect of the present invention is a route setting device that searches for a route to guide a plurality of electric vehicles respectively having batteries to a destination to set a travel route, the route setting device comprising:
a storage means for storing group information in which the plurality of electric vehicles are set as one group, pieces of position information of charging stations capable of supplying power to the batteries of the plurality of electric vehicles and at least one of weight data of each user who rides on the plurality of electric vehicles and information on past electricity consumption record of each user;
a calculation means for calculating a travelable distance of each electric vehicle based on remaining battery capacities acquired from the plurality of electric vehicles and at least one of the weight data of each user and the information on past electricity consumption record of each user;
a determination means for determining whether or not an electric vehicle having a shortest travelable distance among the plurality of electric vehicles can arrive at the destination by comparing a distance from the current location to the destination with the shortest travelable distance calculated by the calculation means; and
a travel guide means for searching the travel route for a charging station at which the electric vehicle having the shortest travelable distance is capable of arriving based on the pieces of position information of the charging stations and providing guidance for a route to the destination via the searched charging station when it is determined by determination process of the determination means that it is difficult for the electric vehicle having the shortest travelable distance to arrive at the destination.

A route setting method according to a ninth aspect of the present invention is a route setting method in a route setting device that searches for a route to guide a plurality of electric vehicles respectively having batteries to a destination to set a travel route, the route setting method comprising:
a storage step of storing, in a storage means, group information in which the plurality of electric vehicles are set as one group, pieces of position information of charging stations capable of supplying power to the batteries of the plurality of electric vehicles and at least one of weight data of each user who rides on the plurality of electric vehicles and information on past electricity consumption record of each user;
a calculation step of calculating, by a calculation means, a travelable distance of each electric vehicle based on remaining battery capacities acquired from the plurality of electric vehicles and at least one of the weight data of each user and the information on past electricity consumption record of each user;
a determination step of determining, by a determination means, whether or not an electric vehicle having a shortest travelable distance among the plurality of electric vehicles can arrive at the destination by comparing a distance from the current location to the destination with the shortest travelable distance calculated in the calculation step; and
a travel guide step of searching, by a travel guide means, the travel route for a charging station at which the electric vehicle having the shortest travelable distance is capable of arriving based on the pieces of position information of the charging stations and providing guidance for a route to the destination via the searched charging station when it is determined by determination process of the determination means that it is difficult for the electric vehicle having the shortest travelable distance to arrive at the destination.

A program according to a tenth aspect of the present invention is a program for causing a computer to execute each step of a route setting method in a route setting device that searches for a route to guide a plurality of electric vehicles respectively having batteries to a destination to set a travel route, the program characterized in that the route setting method comprises:
a storage step of storing, in a storage means, group information in which the plurality of electric vehicles are set as one group, pieces of position information of charging stations capable of supplying power to the batteries of the plurality of electric vehicles and at least one of weight data of each user who rides on the plurality of electric vehicles and information on past electricity consumption record of each user;
a calculation step of calculating, by a calculation means, a travelable distance of each electric vehicle based on remaining battery capacities acquired from the plurality of electric vehicles and at least one of the weight data of each user and the information on past electricity consumption record of each user;
a determination step of determining, by a determination means, whether or not an electric vehicle having a shortest travelable distance among the plurality of electric vehicles can arrive at the destination by comparing a distance from the current location to the destination with the travelable distance calculated in the calculation step; and
a travel guide step of searching, by a travel guide means, the travel route for a charging station at which the electric vehicle having the shortest travelable distance is capable of arriving based on the pieces of position information of the charging stations and providing guidance for a route to the destination via the searched charging station when it is determined by determination process of the determination means that it is difficult for the electric vehicle having the shortest travelable distance to arrive at the destination.

A storage medium according to an eleventh aspect of the present invention is a computer-readable storage medium storing a program for causing a computer to execute each step of a route setting method in a route setting device that searches for a route to guide a plurality of electric vehicles respectively having batteries to a destination to set a travel route, the storage medium characterized in that the route setting method comprises:
a storage step of storing, in a storage means, group information in which the plurality of electric vehicles are set as one group, pieces of position information of charging stations capable of supplying power to the batteries of the plurality of electric vehicles and at least one of weight data of each user who rides on the plurality of electric vehicles and information on past electricity consumption record of each user;
a calculation step of calculating, by a calculation means, a travelable distance of each electric vehicle based on remaining battery capacities acquired from the plurality of electric vehicles and at least one of the weight data of each user and the information on past electricity consumption record of each user;
a determination step of determining, by a determination means, whether or not an electric vehicle having a shortest travelable distance among the plurality of electric vehicles can arrive at the destination by comparing a distance from the current location to the destination with the shortest travelable distance calculated in the calculation step; and
a travel guide step of searching, by a travel guide means, the travel route for a charging station at which the electric vehicle having the shortest travelable distance is capable of arriving based on the pieces of position information of the charging stations and providing guidance for a route to the destination via the searched charging station when it is determined by determination process of the determination means that it is difficult for the electric vehicle having the shortest travelable distance to arrive at the destination.

### ADVANTAGEOUS EFFECTS OF INVENTION

According to the present invention, it is possible to provide a navigation technique capable of providing guidance for the route to the destination via the charging station at which the electric vehicle having the shortest travelable distance can arrive in the case where the power supply for the battery is necessary in consideration of the remaining battery capacity of each vehicle traveling in the group.

That is, even when it is necessary to supply the power to the battery, it is possible to provide guidance for the route to the destination via the charging station without dispersing the plurality of electric vehicles set as the group.

According to the navigation system of the second aspect of the present invention, the battery can be replaced at one charging station collectively for the entire group, and thus, the time required for battery replacement can be shortened.

According to the navigation system of the third aspect of the present invention, the entire group can arrive at the destination without causing the electricity shortage by providing guidance for the route passing through the plurality of charging stations selected such that the sum of pieces of the power information exceeds the total number of the batteries or the total remaining capacity of the batteries even when it is difficult to replace the batteries at one charging station collectively for the entire group.

According to the navigation systems of the fourth aspect and the fifth aspect of the present invention, the entire group can arrive at the destination without causing the electricity shortage while avoiding the electricity shortage in each of the electric vehicles in the group by providing guidance for the sequence of replacing the batteries in the selected charging stations even when it is difficult to replace the batteries at one charging station collectively for the entire group.

There may be a case where it is difficult to receive power supply if the charging station overlaps with another group. According to the navigation system of the sixth aspect of the present invention, it is possible to avoid a situation in which the power supply is not possible due to the overlapping of the charging station by the route guide referring to the schedule information indicating the power supply schedule in the charging station stored for each group.

There may be a difference in electricity consumption depending on how the user rides on the electric vehicle. According to the navigation system of the seventh aspect of the present invention, a more accurate travelable distance can be calculated by referring to the past electricity consumption record of the user riding on the electric vehicle.

There is described a navigation system in which it is possible to provide a navigation technique capable of providing guidance for the route to the destination via the charging station at which the electric vehicle having the smallest remaining battery capacity can arrive in the case where the power supply for the battery is necessary in consideration of the remaining battery capacity of each of the vehicles traveling in the group.

According to the route setting device of the eighth aspect, the route setting method of the ninth aspect, the program of the tenth aspect, and the storage medium of the eleventh aspect of the present invention, it is possible to provide a route setting technique capable of providing guidance for the route to the destination via the charging station at which the electric vehicle having the shortest travelable distance can arrive in the case where the power supply for the battery is necessary in consideration of the remaining battery capacity of each of the vehicles traveling in the group.

There is described a route setting device, a route setting method, a program, and a storage medium in which it is possible to provide a route setting technique capable of providing guidance for the route to the destination via the charging station at which the electric vehicle having the smallest remaining battery capacity can arrive in the case where the power supply for the battery is necessary in consideration of the remaining battery capacity of each of the vehicles traveling in the group.

### BRIEF DESCRIPTION OF DRAWINGS

FIG. 1 is a block diagram illustrating an example of a photographing system according to a first arrangement described for explanatory purposes.
In FIG. 2, ST21 is a block diagram illustrating a functional configuration of a drone, and ST22 is a block diagram illustrating a functional configuration of a processor.
FIG. 3 is a diagram schematically illustrating processing of a determination unit.
FIG. 4 is a diagram illustrating a processing flow in a storage unit 22 and a processor 21.
FIG. 5 is a diagram illustrating a processing flow in an image processor and an image determination unit.
FIG. 6 is a diagram illustrating a flow of a process of adjusting an inter-vehicle distance between a plurality of vehicles.
FIG. 7 is a diagram illustrating a flow of a process of adjusting a speed difference between the plurality of vehicles.
FIG. 8 is a block diagram illustrating a navigation system according to a first embodiment.
In FIG. 9, ST91 is a block diagram illustrating a functional configuration of a processor of a control device, and ST92 is a block diagram illustrating a functional configuration of a processor of a route setting device.
FIG. 10 is a diagram illustrating packet information.
FIG. 11 is a diagram illustrating an example in which a battery replacement record is registered in a database.
FIG. 12 is a diagram illustrating a relationship between a value of power information of a charging station PST and required power.
FIG. 13 is a diagram illustrating the relationship between the value of power information of the charging station PST and the required power.
FIG. 14 is a diagram illustrating a processing flow of a processor 810.
FIG. 15 is a diagram illustrating a specific process in step S 1440 in FIG. 14.

### DESCRIPTION OF EMBODIMENTS

Hereinafter, embodiments will be described in detail with reference to the accompanying drawings. Note that the following embodiments do not limit the invention according to the claims, and all combinations of features described in the embodiments are not necessarily essential to the invention.

### [First Arrangement]

### (Configuration of Photographing System)

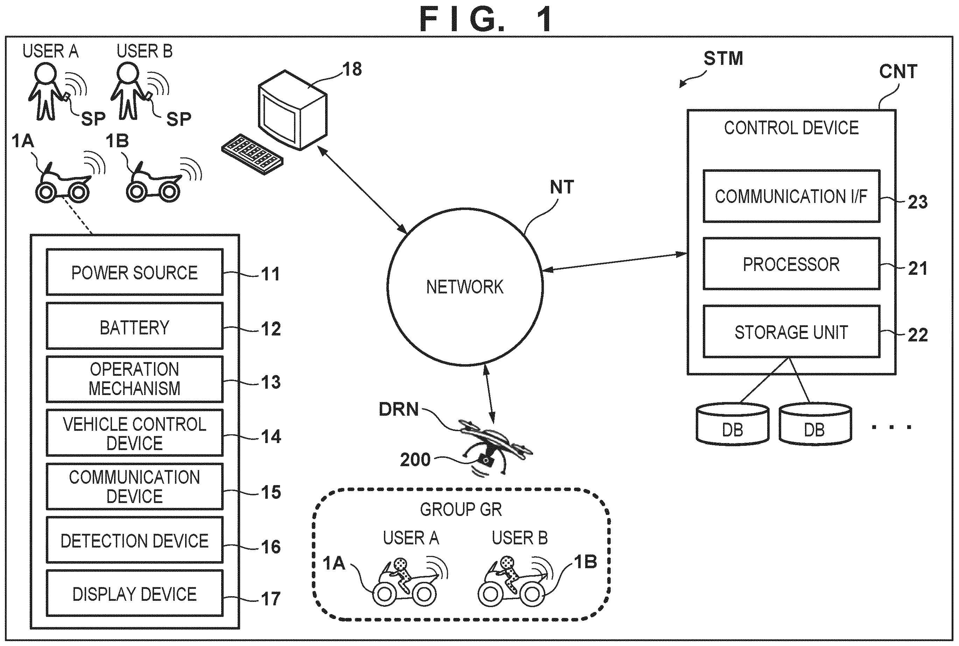

FIG. 1 is a diagram illustrating an example of a configuration of a photographing system STM according to a first arrangement described for explanatory purposes. The photographing system STM includes a plurality of vehicles 1A and 1B, a drone DRN, and a control device CNT (control server) capable of communicating with the plurality of vehicles 1A and 1B and the drone DRN. The drone DRN has a photographing unit 200 (camera) capable of photographing a plurality of vehicles in a flight state.

The control device CNT can remotely communicate with the plurality of vehicles 1A and 1B and the drone DRN via a network NT, and can output a signal for controlling the drone DRN via the network NT.

An information processing device 18 is an external terminal that manages vehicle rental (vehicle use service). When a vehicle is rented to a user, user information for identifying the user and vehicle information for identifying the rented vehicle are transmitted to the control device CNT via the network NT. The information processing device 18 (external terminal) can be installed at an external base (agency) such as a hotel, a rental car company, or a dealer who sells vehicle and provides maintenance services.

The external base (agency) can provide a service of photographing users A and B traveling in the vehicles 1A and 1B with the drone DRN with the plurality of users A and B who have rented the vehicles as a group GR.

When the information (user information and vehicle information) transmitted from the information processing device 18 (external terminal) is acquired via a communication interface unit 23 (communication I/F), the control device CNT registers group information in which the users A and B of the plurality of vehicles 1A and 1B are set as one group GR in a database DB of a storage unit 22. Then, while the plurality of vehicles set as the group are traveling in a predetermined photographing area, a processor 21 of the control device CNT generates a control signal for controlling the photographing unit 200 of the drone DRN, and transmits the control signal to the drone DRN via the network NT.

The photographing unit 200 of the drone DRN can perform photographing based on the control signal transmitted from the control device CNT. Images photographed by the photographing unit 200 are transmitted to the control device CNT via the network NT and stored in the database DB of the storage unit 22. The photographed images can be confirmed (viewed) by preview display on the information processing device 18 (external terminal) or portable terminals SP (for example, smartphones) of the plurality of users A and B at the time of returning the rented vehicles, and the users A and B can purchase image data when they like the photographed images. When the image data is purchased, the image data may be downloaded to the portable terminals SP (smartphones) of the plurality of users A and B, or the image data can also be provided to the users in the state of being stored in a storage medium such as a CD-ROM and a DVD. Specific functional configurations of the processor 21 of the control device CNT and the drone DRN will be described in detail later.

In the first arrangement, the vehicles 1A and 1B can use, for example, an electric two-wheeled vehicle, such as a saddle-ride type vehicle, as examples of a plurality of vehicles. Note that the saddle-ride type vehicle refers to a type in which a driver is seated astride a vehicle body, and such a concept also includes a scooter type two-wheeled vehicle and the like.

Since the vehicle A and the vehicle B have the similar configuration, the configuration of the vehicle 1A will be described as a representative in the following description. Note that FIG. 1 illustrates examples of the two vehicles 1A and 1B as the examples of the plurality of vehicles, but the present invention is not limited to this example, and a group may be constituted by three or more vehicles.

The vehicle 1A includes a power source 11, a battery 12 (power supply device) that supplies electric power to the vehicle, an operation mechanism 13, a vehicle control device 14 that controls the vehicle, and a communication device 15. In the first arrangement, the power source 11 is an electric motor, and the battery 12 can supply power to the power source 11 and the respective elements constituting the vehicle 1. As the battery 12, for example, a rechargeable secondary battery is used, and examples thereof include a lead storage battery, a lithium ion battery, a nickel hydrogen battery, and the like. The battery 12 can be charged by being connected to a power supply capable of supplying a predetermined voltage via a cable. In addition, the charged battery 12 may be mounted on the vehicle by replacement with the charged battery at a battery replacement station provided in the middle of a travel route.

The operation mechanism 13 is configured to enable an input of an operation for controlling the power source 11, and for example, outputs a predetermined signal to the vehicle control device 14, which will be described later, based on the operation input by the user. Examples of the operation input to the operation mechanism 13 include a rotation operation using a predetermined key (an ignition key, a remote key, or the like) corresponding to the vehicle, a pressing operation using a press switch (a start switch or the like), and the like.

The vehicle control device 14 is an electronic control unit (ECU) capable of performing the overall operation control of the vehicle 1A, and can, for example, transmit and receive signals to and from the respective constituent elements of the vehicle 1A via a predetermined signal line. As an example, the vehicle control device 14 can receive a signal corresponding to the operation input to the operation mechanism 13 and perform control to start the power source 11.

A function of the vehicle control device 14 can be achieved by either hardware or software. For example, the function of the vehicle control device 14 may be achieved as a central processing unit (CPU) executes a predetermined program using a memory. Alternatively, the function of the vehicle control device 14 may be achieved by a known semiconductor device such as a programmable logic device (PLD) and an (application-specific semiconductor integrated circuit (ASIC). In addition, here, the vehicle control device 14 is described as a single element, but the vehicle control device 14 may be divided into two or more elements as necessary.

The communication device 15 has an antenna configured to implement communication with the control device CNT via the network NT. In addition, the communication device 15 includes a telematics control unit (TCU) or the like that performs signal processing for implementation of the communication with the control device CNT via the network NT.

The TCU can acquire voltage information indicating a voltage value of the battery 12 from the battery 12, and the TCU can acquire control information indicating a control state of the vehicle 1 from the vehicle control device 14 (ECU). The TCU transmits the acquired voltage information of the battery 12 and control information of the vehicle control device 14 (ECU) to the control device CNT via the network NT. In addition, the TCU can intervene in the vehicle control in the vehicle control device 14 based on information received from the control device CNT.

The communication device 15 can perform vehicle-to-vehicle communication between the plurality of vehicles constituting the group GR, and the communication device 15 of the vehicle 1A can perform wireless communication with the other vehicle 1B constituting the group GR to perform information exchange between the vehicles. The vehicle control device 14 can perform control such that a speed or a vehicle distance at the time of traveling in the photographing area is adjusted within the group GR by the vehicle-to-vehicle communication between the vehicles.

A detection device 16 includes various sensors that detect various states of the vehicle 1A, and includes, for example, a gyro sensor, a GPS sensor, a vehicle speed sensor detecting vehicle speed information, and the like. The vehicle control device 14 can control the vehicle 1A based on information detected by the detection device 16, and the communication device 15 can transmit a detection result of the detection device 16 to the control device CNT via the network NT.

The gyro sensor detects a rotational motion of the vehicle 1A. The vehicle control device 14 can determine a course of the vehicle 1A from a detection result of the gyro sensor, the vehicle speed sensor, and the like. The GPS sensor detects a current position of the vehicle 1A. In addition, the communication device 15 can also perform wireless communication with a server device that provides map information and traffic information and acquire information on the current position of the vehicle 1A.

In the first arrangement, the communication device 15 and the detection device 16 function as an acquisition unit that acquires vehicle position information, and the communication device 15 functions as a vehicle communication unit that transmits the vehicle position information via the network NT.

A display device 17 is configured to be capable of displaying a remaining battery capacity of the battery 12 and notification information received from the control device CNT together with a vehicle speed meter and a tachometer. If the notification information on the vehicle speed and an inter-vehicle distance are received between the vehicles in the group GR from the control device CNT at the time of traveling in the photographing area, the display device 17 can display the notification information to the user to prompt the user to adjust the vehicle speed and the inter-vehicle distance. As a result, it is possible to travel in the photographing area in a state where the vehicle speed and the inter-vehicle distance have been adjusted within the group GR in preparation for photographing at the time of performing photographing.

The control device CNT includes the processor 21, the storage unit 22, and the communication interface unit 23 (communication I/F), and is installed in, for example, a management company that provides a vehicle use service. The processor 21 is configured using a processor including a CPU and a memory, and the storage unit 22 is configured using a RAM that serves as a processing area for a program, a ROM that stores various programs and data, or a relatively large-capacity hard disk drive (HDD). In addition, the processor 21 may also be arranged to be distributed on a cloud.

For example, the processor 21 can communicate with the vehicles 1A and 1B and the drone DRN via the network NT using the communication interface unit 23, and store information on the vehicles 1A and 1B and the drone DRN in the storage unit 22 or read the information on vehicles 1A and 1B and the drone DRN from the storage unit 22. In addition, it is possible to store the image data photographed by the photographing unit 200 of the drone DRN in the storage unit 22.

When a vehicle is rented to a user, user information for identifying the user and vehicle information for identifying the rented vehicle are transmitted to the control device CNT via the network NT. The storage unit 22 can register group information in which users of a plurality of vehicles are set as one group GR. In the example of FIG. 1, the group GR is constituted by the user A who uses the vehicle 1A and the user B who uses the vehicle 1B. Note that only one group GR is illustrated in the example of FIG. 1, but the storage unit 22 can also register group information related to a plurality of groups.

### (Functional Configuration of Drone DRN)

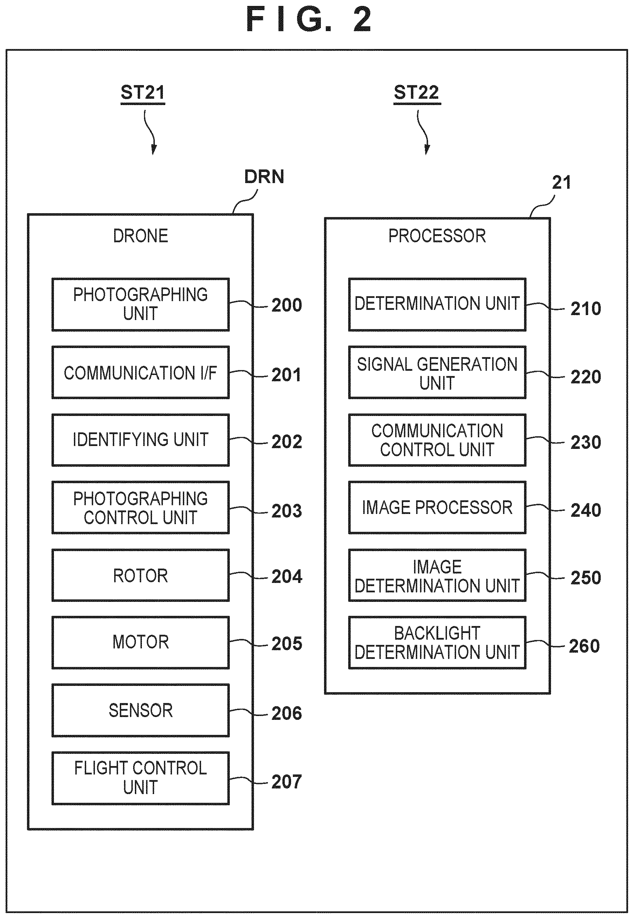

Next, the functional configuration of the drone DRN will be described. ST21 in FIG. 2 is a block diagram illustrating the functional configuration of the drone DRN. The photographing unit 200 is the camera mounted on the drone DRN, and the photographing unit 200 is configured to be capable of photographing a plurality of vehicles in a flight state of the drone DRN. The photographing unit 200 of the drone DRN is capable of photographing a still image or a moving image.

The communication interface unit 201 (communication I/F) can communicate with the vehicles 1A and 1B and the control device CNT via the network NT. The communication interface unit 201 transmits the image data photographed by the photographing unit 200 to the control device CNT.

An identifying unit 202 identifies the plurality of vehicles constituting the group GR based on pieces of vehicle information distributed from the plurality of vehicles 1A and 1B, and the vehicle information included in the group information transmitted from the control device CNT. When the drone DRN performs photographing, the group information including the vehicle information for identifying the vehicle is transmitted from the communication interface unit 23 of the control device CNT to the drone DRN as the information for identifying the group GR. In addition, the plurality of vehicles 1A and 1B distribute pieces of the vehicle information for identifying the vehicles from the communication devices 15 during traveling, and the identifying unit 202 can collate the vehicle information and identify the plurality of vehicles constituting the group GR based on the group information transmitted from the communication interface unit 23 of the control device CNT.

A photographing control unit 203 controls the photographing unit 200 based on a control signal to control photographing in the plurality of vehicles identified by the identifying unit 202. When receiving the control signal (parameter control signal) transmitted from the control device CNT, the photographing control unit 203 can perform control to move an angle of view of the photographing unit 200 in the horizontal direction (Pan control), control to move the angle of view of the photographing unit 200 in the vertical direction (Tilt control), and control to perform photographing by enlarging (zooming up) or reducing (zooming out) the angle of view based on the control signal.

A rotor 204 rotates with a motor 205 as a drive source, and generates a propulsive force of the drone DRN. The drone DRN is provided with at least four rotors 204 and motors 205 in order to control an attitude in the flight state, and a flight control unit 207 can control the output of each of the motors 205. The flight control unit 207 can turn to change a flight position or change the flight altitude based on the control signal transmitted from the control device CNT.

A sensor 206 is, for example, a distance sensor, and detects a distance between the drone DRN and each of the plurality of vehicles identified by the identifying unit 202.

### (Functional Configuration of Processor 21)

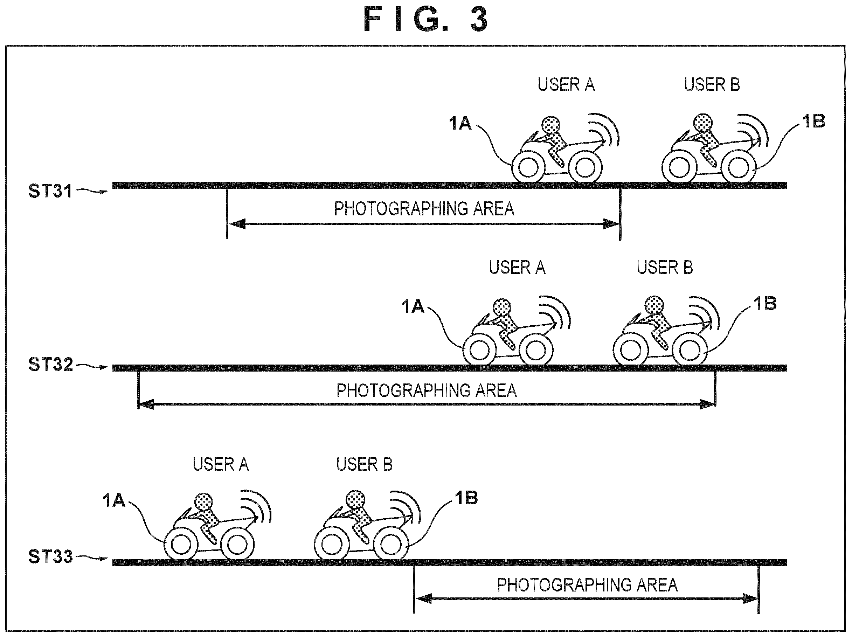

Next, the specific functional configuration of the processor 21 of the control device CNT will be described. ST22 in FIG. 2 is a block diagram illustrating the functional configuration of the processor 21. FIG. 3 is a diagram schematically illustrating processing of a determination unit 210.

The determination unit 210 can perform various determination processes and, for example, determines whether the plurality of vehicles 1A and 1B are traveling in the predetermined photographing area based on the position information of the plurality of vehicles 1A and 1B set as the group GR and the map information. The determination unit 210 can access a map information database constructed in the storage unit 22, and the determination unit 210 compares the position information of the plurality of vehicles and the map information to determine whether the plurality of vehicles are traveling in the set photographing area.

For example, the determination unit 210 determines that the plurality of vehicles 1A and 1B are traveling in the photographing area in a case where the determination unit 210 has determined that at least one (the vehicle 1A) of the plurality of vehicles 1A and 1B set as the group GR has entered the photographing area such as a case where the photographing area is smaller (has a shorter distance) than a reference area and a case where the inter-vehicle distance between the vehicles 1A and 1B in the group GR is wide as illustrated in ST31 in FIG. 3.

In addition, the determination unit 210 determines that the plurality of vehicles are traveling in the photographing area in a case where all of the plurality of vehicles 1A and 1B set as the group GR have entered the photographing area such as a case where the photographing area is larger (has a longer distance) than the reference area as illustrated in ST32 in FIG. 3.

A signal generation unit 220 can generate various signals based on the determination of the determination unit 210 and, for example, generates a control signal for controlling the photographing unit 200 of the drone DRN based on the determination of the determination unit 210.

When the determination unit 210 has determined that the plurality of vehicles are traveling in the photographing area in a state where photographing is not started, the signal generation unit 220 generates a control signal for instructing the start of photographing.

In addition, when the determination unit 210 has determined that at least one of the plurality of vehicles is traveling in the photographing area after the start of photographing, the signal generation unit 220 generates a control signal for instructing the continuation of photographing.

Then, when the determination unit 210 has determined that all of the plurality of vehicles 1A and 1B have left the photographing area as illustrated in ST33 of FIG. 3, the signal generation unit 220 generates a control signal for instructing the end of photographing.

The communication control unit 230 can transmit the signal generated by the signal generation unit 220 via the communication interface unit 23 and transmit, for example, the control signal generated by the signal generation unit 220 to the drone DRN via the communication interface unit 23.

When photographing is started, the communication control unit 230 transmits the group information and the control signal to the drone DRN. As a result, the identifying unit 202 of the drone DRN can identify the plurality of vehicles constituting the group GR based on the group information, and the plurality of identified vehicles can be photographed by the photographing unit 200.

When the determination unit 210 has determined that at least one of the plurality of vehicles has entered the photographing area or a predetermined preparation area set in front of the photographing area, the signal generation unit 220 can also generate an area notification signal for notifying the user that the vehicle has entered the photographing area or the preparation area, and the communication control unit 230 can also transmit the area notification signal to the plurality of vehicles.

Since the user is notified of the area notification signal before photographing, it is possible to perform traveling in preparation for photographing, such as adjusting a formation of the vehicles of the group GR.

When photographing is continued or photographing is ended, the communication control unit 230 transmits the control signal for instructing the continuation of photographing or the control signal for instructing the end of photographing generated by the signal generation unit 220 to the drone DRN.

The photographing control unit 203 of the drone DRN performs control to continue the photographing by controlling the photographing unit 200 based on the control signal for instructing the continuation of photographing. In addition, the photographing control unit 203 of the drone DRN performs control to end the photographing by controlling the photographing unit 200 based on the control signal for instructing the end of photographing.

An image processor 240 can perform image processing for extracting a face of the user from the image data photographed by the photographing unit 200 of the drone DRN. When the image data is a moving image, the image processor 240 performs the image processing on an image of each frame. In addition, the image processor 240 can also perform the image processing on an image sampled at a predetermined frame rate.

An image determination unit 250 determines whether or not faces of the users as many as the number of persons set as the group GR have been photographed based on a result of the image processing and the group information. For example, when faces of the users as many as the two users A and B set as the group GR have been extracted by the image processing, that is, when a set number (N1) of the group GR and the number (N2) of extractions extracted by the image processing are equal (N1 = N2), the image determination unit 250 determines that the faces of all the users constituting the group GR have been photographed.

On the other hand, when there is only one face of the user extracted by the result of image processing, that is, when the set number (N1 = 2) of the group GR and the number (N2 = 1) of extractions extracted by the image processing are not equal (in this case, N1 > N2), the image determination unit 250 determines that the faces of the users as many as the number of persons set as the group GR have not been photographed.

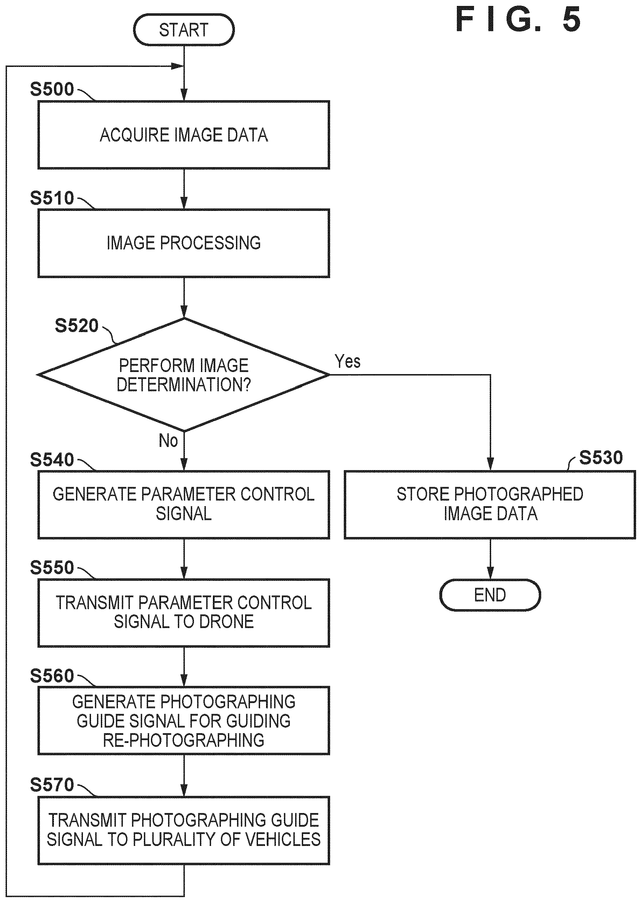

A backlight determination unit 260 determines whether or not there is backlight based on the image data photographed by the photographing unit 200. For example, when the image data photographed by the photographing unit 200 includes a region where a pixel value locally exceeds a reference pixel value, the backlight determination unit 260 can determine that an image is captured in a photographing state with the backlight. In this case, the signal generation unit 220 generates a flight control signal for instructing a change of a flight position of the drone DRN so as to avoid the backlight, or generates a control signal for changing the angle of view of the photographing unit 200. Specific processing thereof will be described in additional processing related to the backlight determination after step S570 in FIG. 5.

### (Processing Flow)

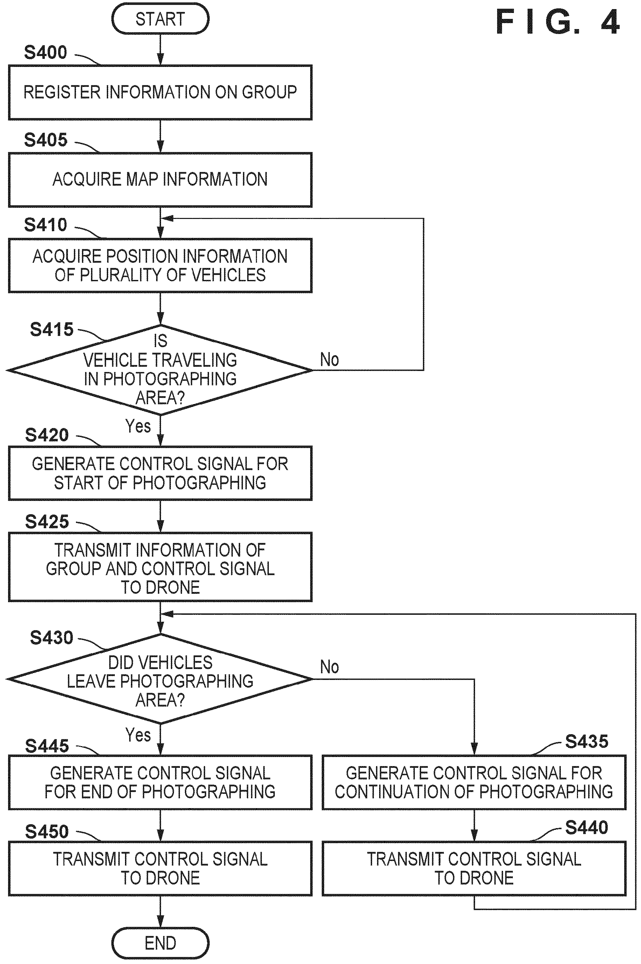

FIG. 4 is a diagram illustrating a processing flow in the storage unit 22 and the processor 21 (the determination unit 210, the signal generation unit 220, and the communication control unit 230).

In step S400, the storage unit 22 registers the information on the group GR. When the control device CNT acquires the information (user information and vehicle information) transmitted from the information processing device 18 (external terminal) via the communication interface unit 23, the storage unit 22 registers the group information in which the users A and B of the plurality of vehicles 1A and 1B are set as one group GR in the database DB.

In step S405, the determination unit 210 acquires the map information from the map information database constructed in the storage unit 22.

In step S410, the determination unit 210 acquires pieces of the position information of the plurality of vehicles. In step S415, the determination unit 210 determines whether the plurality of vehicles 1A and 1B are traveling in the predetermined photographing area based on pieces of the position information of the plurality of vehicles 1A and 1B set as the group GR and the map information.

If the vehicle is not traveling in the photographing area in the determination in step S415 (S415-No), the determination unit 210 returns the processing to step S410 and repeats the similar processes.

On the other hand, if the vehicle is traveling in the photographing area (S415-Yes) in the determination in step S415, the processing proceeds to step S420.

In step S420, the signal generation unit 220 generates the control signal for instructing the start of photographing as the control signal for controlling the photographing unit 200 of the drone DRN based on the determination of the determination unit 210.

Then, in step S425, the communication control unit 230 transmits the registered information on the group GR and the generated control signal to the drone DRN.

The identifying unit 202 of the drone DRN identifies the plurality of vehicles constituting the group GR based on the group information, and the plurality of identified vehicles are photographed by the photographing unit 200.

In step S430, the determination unit 210 determines whether all of the plurality of vehicles 1A and 1B have left the photographing area, and the processing proceeds to step S435 if all of the vehicles have not left the photographing area (S430-No), that is, if the determination unit 210 determines that at least one of the plurality of vehicles is traveling in the photographing area.

In step S435, the signal generation unit 220 generates the control signal for instructing the continuation of photographing. In step S440, the communication control unit 230 transmits the control signal for instructing the continuation of photographing generated by the signal generation unit 220 to the drone DRN. When receiving the control signal for instructing the continuation of photographing, the photographing control unit 203 of the drone DRN performs control to continue the photographing by controlling the photographing unit 200 based on the control signal for instructing the continuation of photographing.

On the other hand, if the determination unit 210 determines that all of the plurality of vehicles 1A and 1B have left the photographing area in the determination in step S430 (S430-Yes), the signal generation unit 220 generates the control signal for instructing the end of photographing in step S445.

Then, in step S450, the communication control unit 230 transmits the control signal for instructing the end of photographing, generated by the signal generation unit 220, to the drone DRN. When receiving the control signal for instructing the end of photographing, the photographing control unit 203 of the drone DRN performs control to end the photographing by controlling the photographing unit 200 based on the control signal for instructing the end of photographing.

### (Processing flow in Image Processor and Image Determination Unit)

FIG. 5 is a diagram illustrating a processing flow in the image processor 240 and the image determination unit 250. In step S500, the image processor 240 acquires the image data photographed by the photographing unit 200 of the drone DRN.

In step S510, the image processor 240 performs the image processing for extracting the face of the user from the image data.

In step S520, the image determination unit 250 performs an image determination on whether or not the faces of the users as many as the number of persons set as the group GR have been photographed based on the result of the image processing acquired in step S510 and the group information registered in advance.

If the faces of the set number of users have been photographed in the determination in step S520 (S520-Yes), the processing proceeds to step S530.

Then, the storage unit 22 stores the photographed image data in the database and ends the processing in step S530.

The image data stored in the database can be provided for the preview display on the information processing device 18 (external terminal) or the portable terminals SP of the plurality of users A and B when the rented vehicles are returned. If the users A and B like the photographed images, they can purchase the image data. In this case, the image data can be downloaded to the portable terminals SP (smartphones) of the plurality of users A and B. In addition, the image data can also be provided to the user in the state of being stored in the storage medium.

On the other hand, if the faces of the set number of users have not been photographed in the determination in step S520 (S520-No), the processing proceeds to step S540.

In step S540, the signal generation unit 220 generates the parameter control signal for controlling a photographing parameter. If the faces of the set number of users have not been photographed, the signal generation unit 220 generates the parameter control signal for controlling the photographing parameter of the photographing unit 200 such that the faces of the set number of users (all the users) can be photographed. The signal generation unit 220 can generate a parameter control signal for moving the angle of view of the photographing unit 200 in the horizontal direction as a photographing parameter for the Pan control, or a parameter control signal for moving the angle of view of the photographing unit 200 in the vertical direction as a photographing parameter for the Tilt control. Further, it is possible to generate a parameter control signal for performing photographing by enlarging (zooming up) or reducing (zooming out) the angle of view.

In step S550, the communication control unit 230 transmits the parameter control signal generated by the signal generation unit 220 to the drone DRN. When receiving the parameter control signal, the photographing control unit 203 of the drone DRN controls the photographing unit 200 based on the parameter control signal to perform the photographing while moving on the drone DRN. Since the angle of view of the photographing unit 200 is controlled based on the parameter control signal, the faces of all the persons of the group can be photographed.

In step S560, the signal generation unit 220 generates a photographing guide signal for re-photographing guidance. When the faces of the set number of the users A and B have not been photographed in the determination of the image determination unit 250, the signal generation unit 220 generates the photographing guide signal for guiding the user A and B to redo photographing.

Then, in step S570, the communication control unit 230 transmits the photographing guide signal to the plurality of vehicles 1A and 1B. When receiving the photographing guide signal, the display device 17 of each vehicle shows the user a display based on the photographing guide signal to providing guidance for photographing again. As a result, even if the faces of all the users have not been photographed, it is possible to immediately redo photographing in the photographing area by generating the photographing guide signal and transmitting the photographing guide signal to the plurality of vehicles.

After step S570, the processing is returned to step S500, and the similar processes are repeated thereafter.

### (Additional Processing Related to Backlight Determination)

Note that it is also possible to perform the additional processing related to the backlight determination after step S570. The backlight determination unit 260 determines whether or not the photographing state is backlight based on the image data photographed by the photographing unit 200. For example, when the image data photographed by the photographing unit 200 includes a region where a pixel value locally exceeds a reference pixel value, the backlight determination unit 260 determines that the image is captured in the photographing state with the backlight.

The signal generation unit 220 generates the flight control signal for instructing the change of the flight position of the drone DRN so as to avoid the backlight when the photographing state is determined to be backlight. For example, the signal generation unit 220 generates a flight control signal for instructing the drone DRN to turn such that the sun is not included within a range of a viewing angle of the photographing unit.

The communication control unit 230 transmits the flight control signal to the drone DRN. When receiving the flight control signal, the flight control unit 207 of the drone changes the flight position based on the flight control signal.

In addition, when the photographing state is determined to be backlight, the signal generation unit 220 can also generate the control signal (parameter control signal) so as to perform the control (Pan control) of moving the angle of view of the photographing unit 200 in the horizontal direction or the control (Tilt control) of moving the angle of view of the photographing unit 200 in the vertical direction.

The communication control unit 230 transmits the parameter control signal to the drone DRN. When receiving the parameter control signal, the photographing control unit 203 of the drone DRN changes the angle of view of the photographing unit 200 based on the parameter control signal.

When the photographing state with the backlight has been determined based on the photographed image data, it is possible to perform photographing in a state of avoiding the backlight by changing the flight position of the drone or changing the angle of view of the photographing unit 200.

### (Process of Adjusting Inter-Vehicle Distance Between Plurality of Vehicles)

The control device CNT checks the inter-vehicle distance when the plurality of vehicles 1A and 1B travel in the photographing area or the predetermined preparation area set in front of the photographing area, and transmits the notification information to the plurality of vehicles so as to set an inter-vehicle distance suitable for photographing (distance falling within a predetermined reference distance range).

For example, when the inter-vehicle distance between the vehicles exceeds an upper limit distance of the predetermined reference distance range, a distance notification signal for notifying that the inter-vehicle distance is too wide is transmitted to the plurality of vehicles 1A and 1B to notify the users of the respective vehicles.

In addition, when the inter-vehicle distance between the vehicles is equal to or less than a lower limit distance of the predetermined reference distance range, an approach notification signal for notifying that the inter-vehicle distance is too close is transmitted to the plurality of vehicles 1A and 1B to notify the users of the respective vehicles.

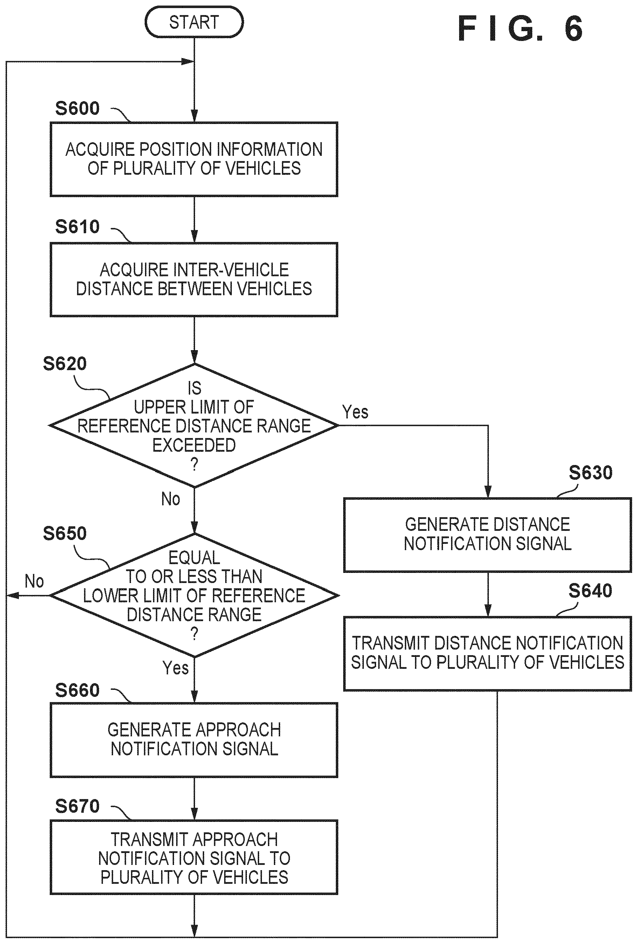

FIG. 6 is a diagram illustrating a flow of a process of adjusting the inter-vehicle distance between the plurality of vehicles. In step S600, the determination unit 210 acquires pieces of the position information of the plurality of vehicles 1A and 1B traveling in the photographing area or the predetermined preparation area set in front of the photographing area. In step S610, the determination unit 210 acquires the inter-vehicle distance between the plurality of vehicles 1A and 1B based on pieces of the position information. For example, the determination unit 210 can acquire the inter-vehicle distance based on a difference in the position information.

In step S620, if the determination unit 210 determines that the acquired inter-vehicle distance exceeds the upper limit distance of the predetermined reference distance range (S620-Yes), the processing proceeds to step S630.

In step S630, the signal generation unit 220 generates the distance notification signal for notifying the user that the inter-vehicle distance exceeds the upper limit distance of the reference distance range. Then, in step S640, the communication control unit 230 transmits the distance notification signal to the plurality of vehicles 1A and 1B. When the inter-vehicle distance is too wide, there is a possibility that it is difficult to photograph the plurality of users simultaneously at the time of traveling in the photographing area. Thus, it is possible to prompt reduction of the inter-vehicle distance by transmitting the distance notification signal for notifying that the inter-vehicle distance exceeds the upper limit distance of the reference distance range to the plurality of vehicles to notify the users.

In addition, if the acquired inter-vehicle distance does not exceed the upper limit distance of the predetermined reference distance range in the determination in step S620 (S620-No), the determination unit 210 advances the processing to step S650.

In step S650, if the determination unit 210 determines that the acquired inter-vehicle distance is not equal to or less than the lower limit distance of the reference distance range (S650-No), the determination unit 210 returns the processing to step S600 and repeatedly executes the similar processes. In this case, the inter-vehicle distance between the plurality of vehicles 1A and 1B is the inter-vehicle distance suitable for photographing (the distance falling within the predetermined reference distance range) so that the process of checking the inter-vehicle distance is continued without generating the notification signal (distance notification signal or the approach notification signal).

On the other hand, if the acquired inter-vehicle distance is equal to or less than the lower limit distance of the predetermined reference distance range in the determination in step S650 (S650-Yes), the determination unit 210 advances the processing to step S660.

In step S660, the signal generation unit 220 generates the approach notification signal for notifying the user that the inter-vehicle distance is equal to or less than the lower limit distance of the reference distance range.

Then, in step S670, the communication control unit 230 transmits the approach notification signal to the plurality of vehicles. When the inter-vehicle distance is too close, there is a possibility that it is difficult to capture the plurality of users simultaneously due to an overlap at the time of traveling in the photographing area. Thus, it is possible to prompt widening of the inter-vehicle distance by transmitting the approach notification signal for notifying that the inter-vehicle distance is equal to or less than the lower limit distance of the reference distance range to the plurality of vehicles to notify the users.

### (Process of Adjusting Speed Difference Between Plurality of Vehicles)

The control device CNT checks a speed difference between the vehicles when the plurality of vehicles 1A and 1B travel in the photographing area or the predetermined preparation area set in front of the photographing area, and transmits a speed notification signal to the plurality of vehicles so as to have a speed difference (equal to or less than a predetermined reference speed) suitable for photographing.

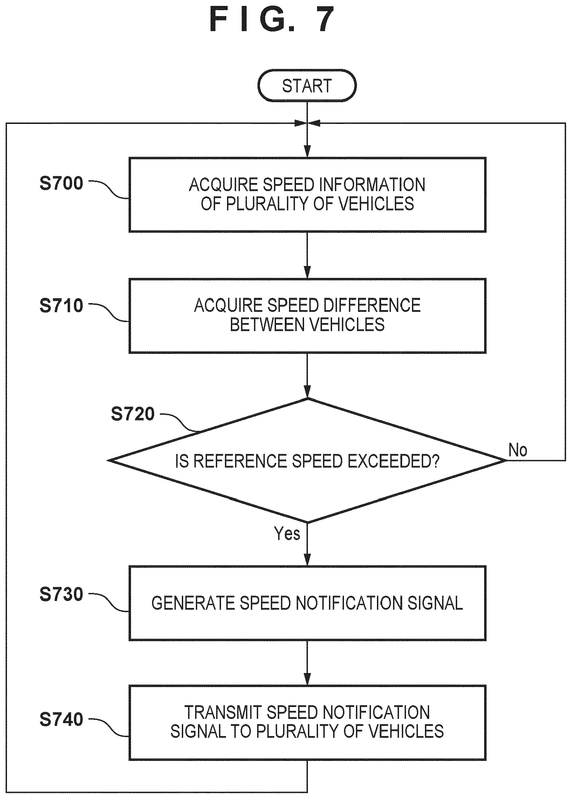

FIG. 7 is a diagram illustrating a flow of a process of adjusting the speed difference between the plurality of vehicles. In step S700, the determination unit 210 acquires pieces of speed information of the plurality of vehicles 1A and 1B traveling in the photographing area or the predetermined preparation area set in front of the photographing area. In step S710, the determination unit 210 acquires the speed difference between the plurality of vehicles 1A and 1B based on pieces of the speed information of the plurality of vehicles 1A and 1B. For example, the determination unit 210 can acquire the speed difference between the vehicles based on a difference in the speed information.

If the acquired speed difference does not exceed the reference speed in step S720 (S720-No), the determination unit 210 returns the processing to step S700 and repeats the similar processes. In this case, the speed difference between the plurality of vehicles 1A and 1B is the speed difference suitable for photographing (equal to or less than the predetermined reference speed) so that the process of checking the speed difference is continued without generating the speed notification signal.

On the other hand, if the speed difference exceeds the predetermined reference speed in the determination in step S720 (S720-Yes), the determination unit 210 advances the processing to step S730.

In step S730, the signal generation unit 220 generates the speed notification signal for notifying the user that the speed difference exceeds the reference speed.

Then, in step S740, the communication control unit 230 transmits the speed notification signal to the plurality of vehicles 1A and 1B.

When the speed difference exceeds the reference speed, there is a possibility that it is difficult to photograph the plurality of users simultaneously at the time of traveling in the photographing area. Thus, it is possible to prompt reduction of the speed difference by transmitting the speed notification signal for notifying that the speed difference exceeds the reference speed to the plurality of vehicles to notify the users.

### [First Embodiment]

Next, a first embodiment of the present invention will be described. In the first arrangement described for explanatory purposes, the description has been given regarding the configuration in which users traveling in vehicles are photographed by the photographing unit 200 (camera) of the drone DRN with a plurality of the users traveling in a group as subjects. In a first described embodiment of the invention, a description will be given regarding a configuration in which guidance is provided for a route to a destination via a charging station without dispersing a plurality of electric vehicles set as a group even when it is necessary to supply power to a battery in consideration of a remaining battery capacity of each of the vehicles traveling in the group.

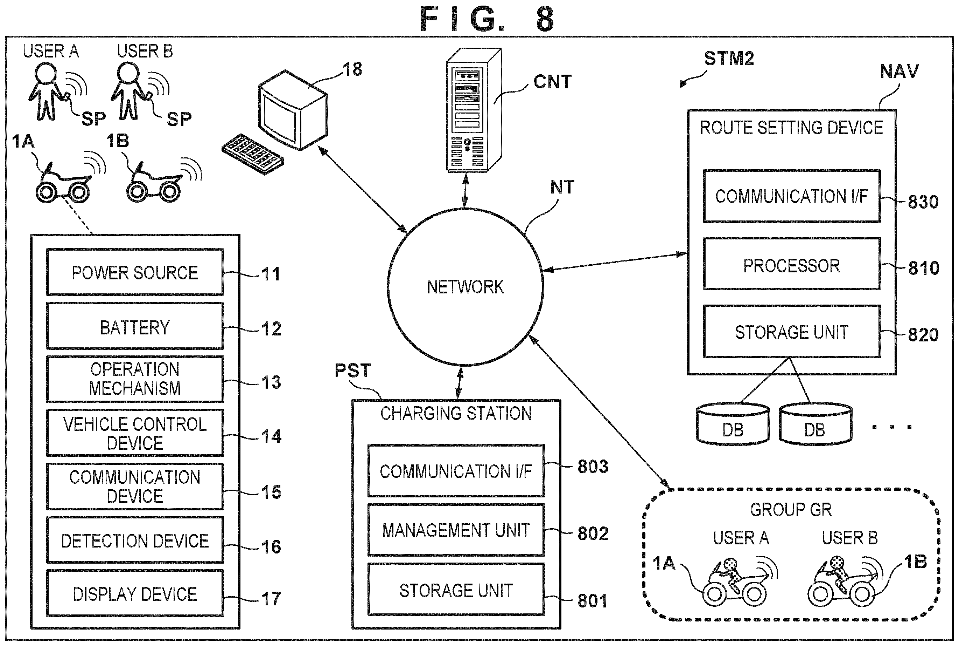

FIG. 8 is a block diagram illustrating an example of a navigation system according to the first embodiment. A navigation system STM2 includes at least a plurality of electric vehicles 1A and 1B and a route setting device NAV that searches for a route for guiding the plurality of electric vehicles 1A and 1B to a destination to set a travel route.

A battery of the electric vehicle can be charged or replaced with a charged battery in a charging station PST, and the charging station PST is a battery replacement station where it is possible to charge the battery of the electric vehicle or perform replacement with the charged battery. The charging station PST includes, as functional configurations, a storage unit 801, a management unit 802, and a communication interface unit 803 (communication I/F).

The storage unit 801 stores power information indicating the number or capacities of replacement batteries charged in the charging station PST. The management unit 802 manages the power information stored in the storage unit 801 and manages a replacement record of a group (user) having replaced a battery in the charging station PST. For example, when each of users A and B of a group GR has replaced N batteries, the management unit 802 sets user information (user ID) for identifying the users A and B, and manages a combination of the user ID, a replacement record (N pieces) corresponding to the user ID, and a replacement date as replacement record information.

The management unit 802 can communicate with the route setting device NAV and a control device CNT via a network NT using the communication interface unit 803, and transmit the power information of the charging station PST and the replacement record information of the user to the route setting device NAV and the control device CNT.

A charging station ID identifiable on the network NT is set for each of the charging stations PST, and the management unit 802 transmits packet information combined with the charging station ID when transmitting the replacement record information of the user via the network NT.

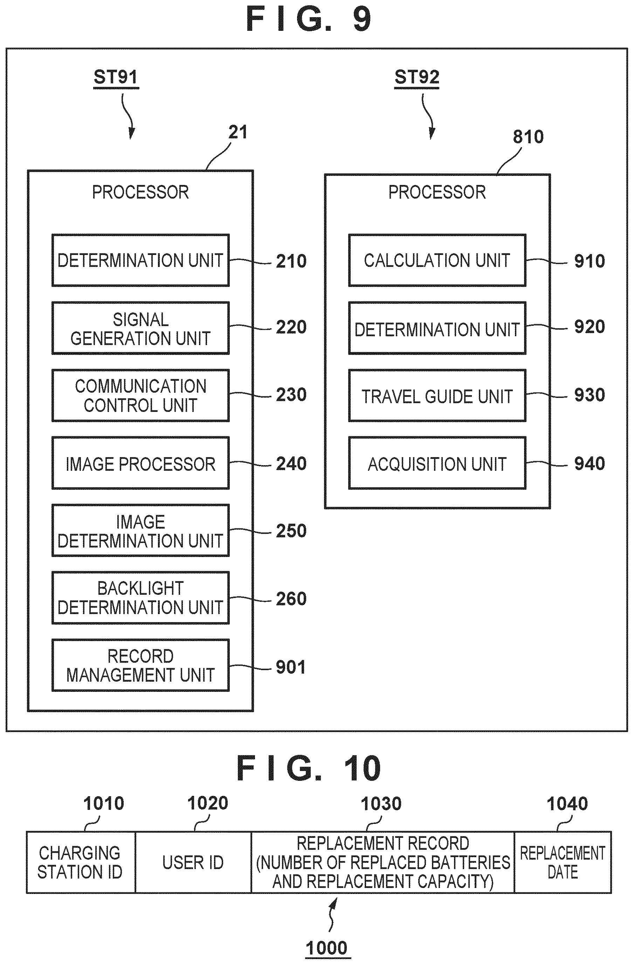

FIG. 10 is a diagram illustrating the packet information, and packet information 1000 includes a charging station ID 1010, a user ID 1020 for identifying each user, a battery replacement record (the number of replaced batteries and a replacement capacity) 1030, and a replacement date 1040 (year/month/day). When the management unit 802 transmits the replacement record information at a predetermined timing, the management unit 802 generates the packet information 1000 as illustrated in FIG. 10, and transmits the packet information 1000 to the control device CNT or the like via the network NT using the communication interface unit 803.

Although there is only one charging station PST in the example of FIG. 8, a plurality of the charging stations PST are arranged on a travel route, the respective charging stations PST have the similar configuration, and the replacement record information is transmitted at a predetermined timing from each of the charging stations PST. The route setting device NAV and the control device CNT can receive the power information of each of the charging stations PST and the user's replacement record information transmitted from a plurality of charging stations PST via the network NT.

In the described embodiment, the plurality of electric vehicles 1A and 1B are similar to as those in the first arrangement, and can use, for example, an electric two-wheeled vehicle such as a saddle-ride type vehicle (including a scooter type two-wheeled vehicle).

In the electric vehicles 1A and 1B, a battery 12 (power supply device) that supplies power to the vehicle can be charged in the charging station PST (battery replacement station), and further, can be replaced with a charged battery in the charging station PST (battery replacement station). The battery 12 used for the electric vehicles 1A and 1B is configured using a plurality of batteries (for example, two batteries) connected in series. When the battery 12 is replaced in the charging station PST (battery replacement station), it is necessary to simultaneously replace the plurality of batteries (for example, two batteries) at the same time.

A communication device 15 in the electric vehicles 1A and 1B includes a telematics control unit (TCU) or the like that performs signal processing for implementation of the communication with the route setting device NAV via the network NT.

The TCU can acquire voltage information indicating a voltage value of the battery 12 (information indicating the remaining battery capacity) from the battery 12, and the TCU can acquire control information indicating a control state of the vehicle 1 from a vehicle control device 14 (ECU). The TCU transmits the acquired voltage information of the battery 12 (information indicating the remaining battery capacity) and the control information of the vehicle control device 14 (ECU) to the route setting device NAV via the network NT.

A display device 17 is configured to be capable of displaying the remaining battery capacity of the battery 12 and navigation information received from the route setting device NAV together with a vehicle speed meter and a tachometer. The display device 17 can display, as the navigation information, information such as information for providing guidance for a route to a destination, guide information of the charging station PST (battery replacement station) to be passed through, and a sequence of battery replacement in the group.

The route setting device NAV can remotely communicate with the plurality of electric vehicles 1A and 1B and the charging station PST (battery replacement station) via the network NT, and can output the information such as the information for providing guidance for the route to the destination, the guide information of the charging station to be passed through, and the sequence of battery replacement in the group to the plurality of electric vehicles 1A and 1B via the network NT.

The route setting device NAV includes a processor 810, a storage unit 820, and a communication interface unit 830 (communication I/F). The processor 810 is configured using a processor including a CPU and a memory, and the storage unit 820 is configured using a RAM that serves as a processing area for a program, a ROM that stores various programs and data, or a relatively large-capacity hard disk drive (HDD). In addition, the processor 21 may also be arranged to be distributed on a cloud.

For example, the processor 810 can communicate with the vehicles 1A and 1B and the charging station PST (battery replacement station) via the network NT using the communication interface unit 830, and store information on the vehicles 1A and 1B and the charging station PST (battery replacement station) in the storage unit 820 or read the information on the vehicles 1A and 1B and the charging station PST (battery replacement station) from the storage unit 820.

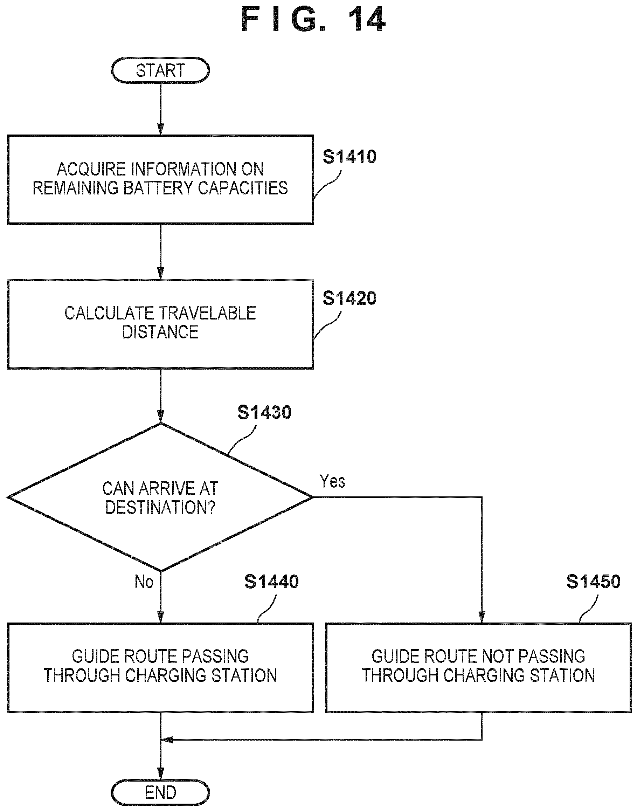

The storage unit 820 includes a plurality of databases. The storage unit 820 stores, for example, group information in which the plurality of electric vehicles are set as one group, and position information of the charging station PST (battery replacement station) capable of supplying power to batteries of the plurality of electric vehicles. The storage unit 820 stores the group information and the position information of the charging station PST (battery replacement station) before the start of a processing flow of FIG. 14.

When a vehicle is rented to a user by processing of an information processing device 18 (external terminal), user information for identifying the user and vehicle information for identifying the rented vehicle are transmitted to the control device CNT and the route setting device NAV via the network NT. The storage unit 820 can register the group information in which users of the plurality of vehicles are set as one group GR. In the example of FIG. 8, the group GR is constituted by the user A who uses the vehicle 1A and the user B who uses the vehicle 1B.

In addition, the storage unit 820 can store, in the database, group information related to a plurality of the groups as the group information and, for each group, schedule information indicating a power supply schedules in the charging stations and information on past electricity consumption records of the users riding on the electric vehicles.

Although the control device CNT and the route setting device NAV are configured as separate devices in the example of FIG. 8, the control device CNT and the route setting device NAV can be integrated into one server device.

### (Functional Configuration of Control Device CNT)

Next, a functional configuration of the control device CNT connected to the network NT in FIG. 8 will be described. The control device CNT illustrated in FIG. 8 is a device corresponding to the control device CNT described in the first arrangement, and ST91 in FIG. 9 is a block diagram illustrating the functional configuration of the control device CNT (FIG. 8). As illustrated in ST91 of FIG. 9, a determination unit 210 to a backlight determination unit 260 have the similar configurations as those described in ST22 of FIG. 2. The block diagram of FIG. 9 includes a record management unit 901 that manages record information related to user's battery replacement, which is different from the block diagram of ST22 of FIG. 2.

When receiving the packet information 1000 transmitted from each of the charging stations PST via the communication interface unit 23, the record management unit 901 registers the information included in the packet information 1000 in the database. The packet information 1000 includes the charging station ID 1010, the user ID 1020, the battery replacement record (the number of replaced batteries and the replacement capacity) 1030, and the replacement date 1040 (year/month/day), and the record management unit 901 registers a history of information indicating a replacement record in the database with the user ID for identifying the user as a reference.

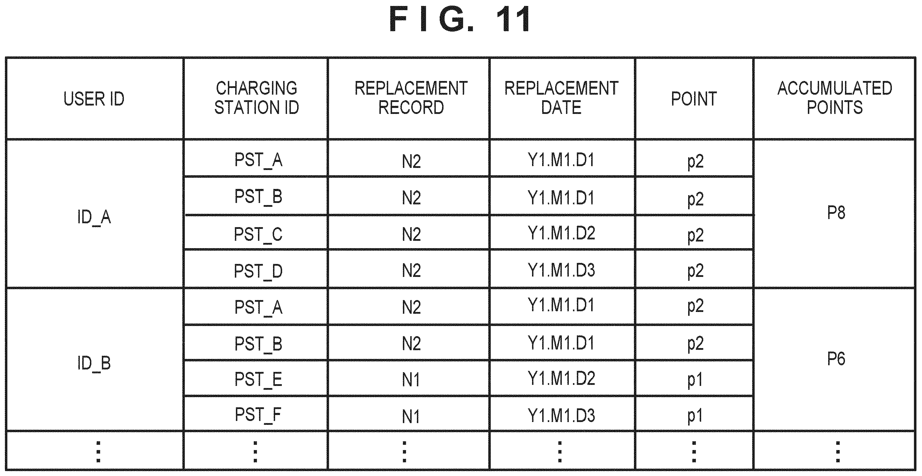

FIG. 11 is a diagram illustrating an example in which the battery replacement record is registered in the database. For each user, a charging station where a battery has been replaced, the number (number or capacities) of replaced batteries, and a replacement date are registered.

In FIG. 11, ID_A is the user ID of a user A, and ID_B is a user ID of the user B. When the users A and B replace batteries at the same charging station, the same charging station ID is registered. In the example of FIG. 11, the users A and B replace batteries (the number (capacities) of the replaced batteries: N2) in charging stations A and B (PST_A and PST_B) at the same time.

On the other hand, only the user A replaces batteries (the number (capacities) of the replaced batteries: N2) in charging stations C and D (PST_C and PST_D), and only the user B replaces batteries (the number (capacities) of the replaced batteries: N1) in charging stations E and F (PST_E and PST_F).

When registering the battery replacement record in the database, the record management unit 901 assigns a point according to the replacement record (the number (capacities) of the replaced batteries). For example, the record management unit 901 assigns a point p1 for the number N1 of replaced batteries, and assigns a point p2 for the number N2 of replaced batteries.

The record management unit 901 calculates the accumulated points obtained by accumulating the respective points and registers the accumulated points in the database. As illustrated in the example of FIG. 11, the record management unit 901 calculates P8 (= p2 × 4) and P6 (= p2 + p2 + p1 + p1) as the accumulated points of the user A and the accumulated points of the user B, respectively.

In the configuration of the first arrangement described above, the users traveling in the vehicles are photographed by the photographing unit 200 of the drone DRN with the plurality of users traveling in the group as the subjects, and the users can purchase image data when the users like the images.

In a case where the system of the first explanatory arrangement is combined with the system of the first embodiment of the invention, the record management unit 901 can perform a discount process of discounting an image purchase cost according to the accumulated points of each of the users when the user purchases image data.

In addition, when vehicle rental (vehicle use service) is provided, the record management unit 901 can also perform a discount process of discounting a vehicle rental fee according to the accumulated points of each of the users.

In this manner, the discount process according to the accumulated points of the user is performed, and thus, it is possible to reduce the burden on the user accompanying the battery replacement and provide an incentive to positively motivate the battery replacement.

### (Functional Configuration of Processor 810)

Next, a specific functional configuration of the processor 810 of the route setting device NAV will be described. ST92 in FIG. 9 is a block diagram illustrating the functional configuration of the processor 810.

When the route setting device NAV acquires the voltage information indicating the voltage value of the battery 12 (information indicating the remaining battery capacity) transmitted from the plurality of electric vehicles using the communication interface unit 830, the calculation unit 910 calculates travelable distances of the respective electric vehicles based on the remaining battery capacities acquired from the plurality of electric vehicles. The database of the storage unit 820 stores the information on the past electricity consumption record of the user riding on the electric vehicle, and the calculation unit 910 can calculate the travelable distance by referring to the information on the electricity consumption record.

In addition, it is also possible to store weight data of each of the users in the database of the storage unit 820 in advance, and the calculation unit 910 can calculate the travelable distance by referring to the weight data of the user.

In addition, it is possible to store terrain information in the database of the storage unit 820, and the calculation unit 910 can obtain a road gradient of the travel route based on a comparison between the travel route from a current location to the destination and the terrain information. As the road gradient, it is also possible to divide the travel route into, for example, a part of an uphill travel path, a part of a flat travel path, and a downhill part, and calculate the travelable distance based on a ratio of each of the parts.

It is also possible to store a table in which the ratio of each of the parts (uphill part, flat part, and downhill part) is associated with the travelable distance in the database in advance, and the calculation unit 910 can acquire the travelable distance by referring to the table in the database at the time of calculating the travelable distance.

In addition, the calculation unit 910 can also acquire weather information from an external server device via the communication interface unit 830, estimate the amount of power consumption of the battery 12, and calculate the travelable distance.

The weather information includes temperatures and weather conditions (sunny, cloudy, rainy, or the like) at the current location, the destination, and a stopover place midway from the current location to the destination. In addition, the calculation unit 910 can acquire the weather information in hours (for example, assuming that the present as 0, 2 hours later, 2 to 4 hours later, 4 to 6 hours later, and the like) in consideration of travel time by the electric vehicle, estimate the amount of power consumption of the battery 12, and calculate the travelable distance.

Next, the determination unit 920 compares a distance from the current location to the destination with the calculated travelable distance to determine whether or not an electric vehicle having the shortest travelable distance between the plurality of electric vehicles 1A and 1B can arrive at the destination.

A travel guide unit 930 performs wireless communication with an external server device that provides map information and traffic information via the communication interface unit 830, acquires these pieces of information, and searches for a route from the current location to the destination. In addition, when it is determined that it is difficult to arrive at the destination based on the determination in the determination unit 920, the travel guide unit 930 searches the travel route for a charging station at which the electric vehicle having the shortest travelable distance can arrive based on pieces of the position information of the charging stations, and provides guidance for a route to the destination via the charging station.

The acquisition unit 940 acquires the power information indicating the number or capacities of replacement batteries charged in each of the charging stations from the plurality of charging stations PST arranged on the travel route based on pieces of the position information of the charging stations. The management unit 802 of each of the charging stations PST transmits the power information of the charging station PST to the route setting device NAV via the network NT using the communication interface unit 803. The acquisition unit 940 identifies the charging station PST arranged on the travel route from among the plurality of charging stations PST based on pieces of the position information of the charging stations, and acquires the power information from the identified charging station PST.

The travel guide unit 930 compares the power information of each of the charging stations PST acquired by the acquisition unit 940 and a total number of batteries or a total capacity (remaining capacity) of the batteries required for the plurality of electric vehicles to arrive at the destination. Here, the total number of the batteries or the total capacity (remaining capacity) of the batteries required for the plurality of electric vehicles to arrive at the destination is defined as required power.

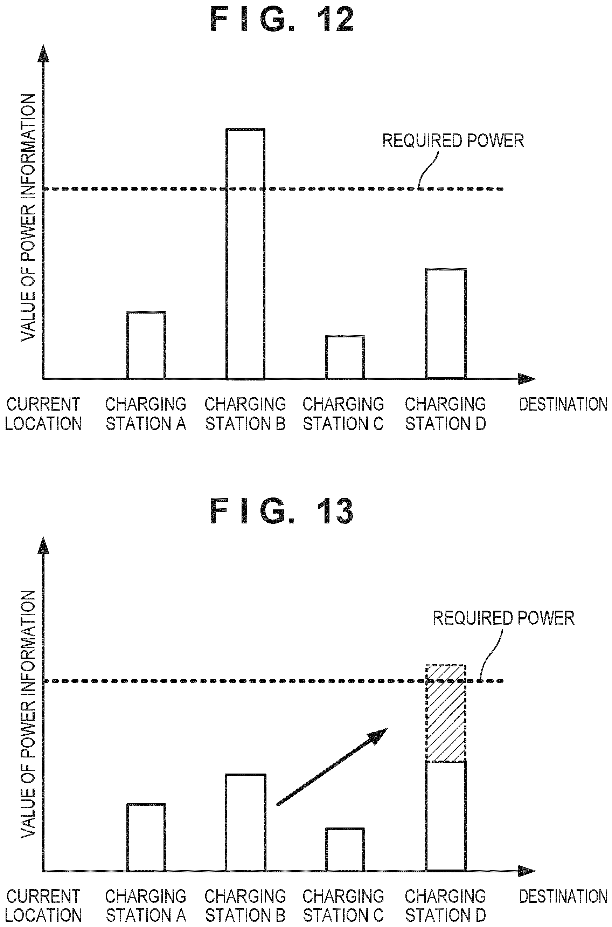

FIG. 12 is a diagram schematically illustrating a relationship between a value of the power information of each of the charging stations PST and the required power. As illustrated in FIG. 12, the value of the power information of the charging station B exceeds the required power (power information ≥ required power). In this case, the plurality of electric vehicles 1A and 1B can arrive at the destination by replacing the batteries once in the charging station B.

In this case, the travel guide unit 930 selects the charging station (in the case of FIG. 12, the charging station B) of which the power information exceeds the total number of the batteries or the total remaining capacity of the batteries, required for the plurality of electric vehicles to arrive at the destination, from the plurality of charging stations (in the case of FIG. 12, the charging stations A to D), and provides guidance for a route passing through the charging station (the charging station B).

FIG. 13 is a diagram schematically illustrating the relationship between the value of the power information of each of the charging stations PST and the required power. As illustrated in FIG. 13, there is no single charging station with the power information exceeding the required power. However, the sum of the value of the power information of the charging station B and the value of the power information of the charging station D exceeds the required power.

That is, when the power information is below the total number of the batteries or the total remaining capacity of the batteries required for the plurality of electric vehicles 1A and 1B to arrive at the destination (power information < required power), the travel guide unit 930 provides guidance for a route passing through a plurality of charging stations (in the case of FIG. 13, the charging stations B and D) selected such that the sum of pieces of the power information (the sum of the value of the power information of the charging station B and the value of the power information of the charging station D) exceeds the total number of the batteries or the total remaining capacity of the batteries.

When guidance is provided for the route passing through the plurality of charging stations, the travel guide unit 930 provides guidance for the sequence of replacing the batteries in the selected charging stations (in the case of FIG. 13, the charging stations B and D) based on a comparison between the travelable distance of each of the electric vehicles and the number or capacities of replacement batteries charged in the selected charging stations. The travel guide unit 930 sets a higher priority in ascending order of the travelable distance between the plurality of electric vehicles 1A and 1B and determines the sequence of replacing the batteries. For example, the first priority is set for an electric vehicle having the shortest travelable distance (for example, the electric vehicle 1A) between the plurality of electric vehicles 1A and 1B, and then, the second priority is set for an electric vehicle having the second shortest travelable distance (for example, the electric vehicle 1B).

The travel guide unit 930 sets the charging station B, which is closer to a current value, as a charging station where the electric vehicle with the first priority performs the battery replacement, and sets the charging station D as a charging station where the electric vehicle with the second priority performs the battery replacement.

When the travel guide unit 930 provides guidance for the route passing through the charging station, the travel guide unit 930 stores the schedule information indicating the power supply schedule in the charging station in the database of the storage unit 820 for each group. When providing guidance for the route to the destination, the travel guide unit 930 refers to the schedule information in the database to search the travel route for a charging station different from a charging station scheduled for supply to another group, and provides guidance for the route to this destination via the charging station.

For example, in the case of FIG. 12, when the supply (battery replacement) is scheduled in the charging station B, the travel route is searched for a charging station different from the charging station B, and guidance is provided for a route to the destination via this charging station. In this case, since there is no single charging station with the power information exceeding the required power, the travel guide unit 930 uses a route passing through the plurality of charging stations selected such that the sum of pieces of the power information exceeds the required power.

The charging stations (battery replacement stations) can be installed in, for example, a hotel, a souvenir shop, a restaurant, and the like. It is possible to register available hours of the charging stations (battery replacement stations) (for example, business hours of the hotel, the souvenir shop, the restaurant, and the like) in advance in the database of the storage unit 820. When the travel guide unit 930 selects a charging station (battery replacement station) in the guidance for the travel route, the travel guide unit 930 can select the available charging station (battery replacement station) by referring to the available hours of the charging stations (battery replacement stations) registered in the database.

### (Processing Flow)

FIG. 14 is a diagram illustrating a processing flow of the processor 810.

In step S1410, the calculation unit 910 acquires pieces of the information on the remaining battery capacities from the plurality of electric vehicles.

In step S1420, the calculation unit 910 calculates the travelable distance of each of the electric vehicles based on the remaining battery capacities acquired from the plurality of electric vehicles.

In step S1430, the determination unit 920 determines whether or not an electric vehicle having the shortest travelable distance between the plurality of electric vehicles can arrive at the destination by comparing a distance from the current location to the destination with the travelable distance calculated in step S1420. If it is possible to arrive at the destination (S1430-Yes), the determination unit 920 advances the processing to step S1450. In step S1450, the travel guide unit 930 provides guidance for a route that does not pass through the charging station. Note that the process of step S1430 is not limited to the determination process using the travelable distance, and the determination unit 920 can also determine whether or not the electric vehicle having the smallest remaining battery capacity among the plurality of electric vehicles can arrive at the destination by comparing the remaining battery capacities acquired from the plurality of electric vehicles.

On the other hand, if it is determined that it is difficult to arrive at the destination in the determination in step S1430 (S1430-No), the determination unit 920 advances the processing to step S1440.

Then, in step S1440, the travel guide unit 930 searches the travel route for a charging station at which the electric vehicle having the shortest travelable distance based on pieces of the position information of the charging stations, and provides guidance for a route to the destination via this charging station. Here, when it is determined that it is difficult to arrive at the destination by the determination process based on the remaining battery capacity (S1430), the travel guide unit 930 can search the travel route for a charging station at which the electric vehicle having the smallest remaining battery capacity can arrive based on pieces of the position information of the charging stations, and can provide guidance for a route to the destination via this charging station.

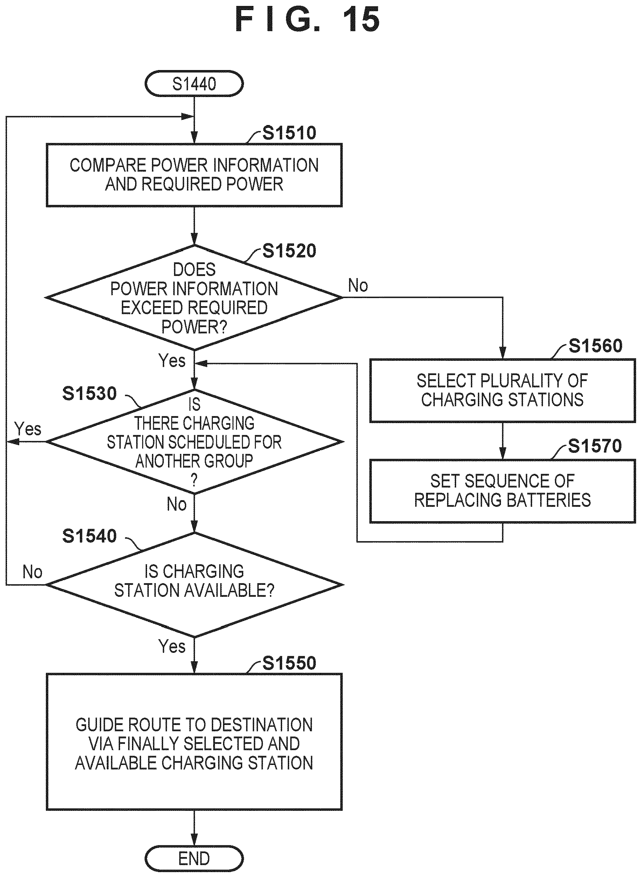

FIG. 15 is a diagram illustrating a specific processing flow of step S1440 of FIG. 14.

In step S1510, the travel guide unit 930 compares the power information of each of the charging stations PST and the required power (a total number of batteries or a total capacity (remaining capacity) of the batteries required for the plurality of electric vehicles to arrive at the destination).

In step S1520, the travel guide unit 930 selects a charging station with the power information exceeding the required power (in the case of FIG. 12, the charging station B) from the plurality of charging stations based on the comparison between the power information and the required power.

In step S1530, the travel guide unit 930 determines whether or not the charging station selected in S1520 is a charging station scheduled for supply to another group by referring to the schedule information in the database. If the charging station is scheduled for supply to another group (S1530-Yes), the processing is returned to step S1510 and the similar processes are performed. In this case, the charging station selected in the first processing is excluded in the process of step S1520.

If the charging station is not scheduled for supply to another group in the determination in step S1530 (S1530-No), the travel guide unit 930 advances the processing to step S1540.

In step S1540, the travel guide unit 930 determines whether or not the selected charging station is available by referring to the available hours of the charging stations (battery replacement stations) registered in the database. If the selected charging station is not available, the travel guide unit 930 returns the processing to step S1510 and performs the similar processes. In this case, the charging station scheduled for supply to another group and the charging station that is not available are excluded in the process of step S1520.

If the selected charging station is available in the determination in step S1540 (S1540-Yes), the travel guide unit 930 advances the processing to step S1550.

Then, in step S1550, the travel guide unit 930 provides guidance for a route to the destination via the finally selected and available charging station.

On the other hand, if there is no single charging station with the power information exceeding the required power in the determination in step S1520 (S1520-No), the travel guide unit 930 advances the processing to step S1560.

In step S1560, the travel guide unit 930 selects a plurality of the charging stations such that the sum of pieces of the power information (for example, the sum of the value of the power information of the charging station B and the value of the power information of the charging station D in FIG. 13) exceeds the required power.

In step S1570, the travel guide unit 930 sets the sequence of replacing the batteries in the selected charging stations.

Then, the travel guide unit 930 advances the processing to step S1530, and the travel guide unit 930 determines whether or not supply to another group is scheduled. In addition, the travel guide unit 930 determines whether or not the plurality of selected charging stations are available in step S1540.

Then, in step S1550, the travel guide unit 930 provides guidance for a route to the destination via the plurality of finally selected and available charging station. The travel guide unit 930 transmits the sequence of the battery replacement set in step S1570 to the plurality of electric vehicles, provides guidance for the sequence of the battery replacement in the plurality of finally selected charging stations, and ends the processing.

### <Summary of Embodiments>

There is disclosed above at least the following configurations.

Configuration 1. The navigation system according to the above embodiment is a navigation system (for example, STM2 of FIG. 8) including: a plurality of electric vehicles (for example, 1A and 1B in FIG. 8) respectively having batteries; and a route setting device (for example, NAV of FIG. 8) that searches for a route for guiding the plurality of electric vehicles to a destination to set a travel route. The route setting device (NAV) includes: a storage means (for example, 820 in FIG. 8) for storing group information in which the plurality of electric vehicles are set as one group and pieces of position information of charging stations capable of supplying power to batteries (for example, 12 in FIG. 8) of the plurality of electric vehicles; a calculation means (for example, 910 in FIG. 9) for calculating a travelable distance of each electric vehicle based on remaining battery capacities acquired from the plurality of electric vehicles; a determination means (for example, 920 in FIG. 9) for determining whether or not an electric vehicle having a shortest travelable distance among the plurality of electric vehicles is capable of arriving at the destination; and a travel guide means (for example, 930 in FIG. 9) for searching the travel route for a charging station (for example, PST in FIG. 8) at which the electric vehicle having the shortest travelable distance is capable of arriving and provides guidance for a route to the destination via the searched charging station when it is determined that it is difficult to arrive at the destination.

According to the navigation system of Configuration 1, it is possible to provide a navigation technique capable of providing guidance for the route to the destination via the charging station at which the electric vehicle having the shortest travelable distance can arrive in the case where the power supply for the battery is necessary in consideration of the remaining battery capacity of each of the vehicles traveling in the group.

That is, even when it is necessary to supply the power to the battery, it is possible to provide guidance for the route to the destination via the charging station without dispersing the plurality of electric vehicles set as the group.

Configuration 2. In the navigation system of the above embodiment, the battery (12) is capable of being charged or replaced with a charged battery in the charging station (PST), and the charging station is a battery replacement station where charging of the battery or replacement of the battery is possible. The route setting device (NAV) further includes an acquisition means (for example, 940 in FIG. 9) for acquiring power information indicating a number or capacities of replacement batteries charged in each of the charging stations from a plurality of the charging stations arranged on the travel route based on the pieces of position information of the charging stations. The travel guide means (930) selects a charging station with the power information exceeding a total number of batteries or a total remaining capacity of the batteries, required for the plurality of electric vehicles to arrive at the destination, from the plurality of charging stations and provides guidance for a route passing through the charging station.

According to the navigation system of Configuration 2, the battery can be replaced at one charging station collectively for the entire group, and thus, the time required for battery replacement can be shortened.

Configuration 3. In the navigation system of the above embodiment, the battery (12) is capable of being charged or replaced with a charged battery in the charging station (PST), and the charging station is a battery replacement station where charging of the battery or replacement of the battery is possible. The route setting device (NAV) further includes an acquisition means (for example, 940 in FIG. 9) for acquiring power information indicating a number or capacities of replacement batteries charged in each of the charging stations from a plurality of the charging stations arranged on the travel route based on the pieces of position information of the charging stations. When the power information is below a total number of batteries or a total remaining capacity of the batteries required for the plurality of electric vehicles to arrive at the destination, the travel guide means (930) provides guidance for a route passing through a plurality of charging stations selected such that a sum of pieces of the power information exceeds the total number of the batteries or the total remaining capacity of the batteries.

According to the navigation system of Configuration 3, the entire group can arrive at the destination without causing the electricity shortage by providing guidance for the route passing through the plurality of charging stations selected such that the sum of pieces of the power information exceeds the total number of the batteries or the total remaining capacity of the batteries even when it is difficult to replace the batteries at one charging station collectively for the entire group.

Configuration 4. In the navigation system of the above embodiment, the travel guide means (930) provides guidance for a sequence of replacing the batteries in the plurality of selected charging stations based on a comparison between the travelable distance of each of the electric vehicles and a number or capacities of replacement batteries charged in each of the selected charging stations.

Configuration 5. In the navigation system of the above embodiment, the travel guide means (930) determines the sequence of replacing the batteries by setting a higher priority in ascending order of the travelable distance among the plurality of electric vehicles.

According to the navigation systems of Configuration 4 and Configuration 5, the entire group can arrive at the destination without causing the electricity shortage while avoiding the electricity shortage in each of the electric vehicles in the group by providing guidance for the sequence of replacing the batteries in the selected charging stations even when it is difficult to replace the batteries at one charging station collectively for the entire group.

Configuration 6. In the navigation system of the above embodiment, the storage means (820) stores schedule information, which indicates a power supply schedule in the charging station, for each group, and the travel guide means (930) refers to the schedule information to search the travel route for a charging station different from a charging station scheduled for supply to another group, and provides guidance for a route to the destination via the searched charging station.

There may be a case where it is difficult to receive power supply if the charging station overlaps with another group. According to the navigation system of Configuration 6, it is possible to avoid a situation in which the power supply is not possible due to the overlapping of the charging station by the route guide referring to the schedule information indicating the power supply schedule in the charging station stored for each group.

Configuration 7. In the navigation system of the above embodiment, the storage means (820) stores information on a past electricity consumption record of a user riding on the electric vehicle, and the calculation means (910) refers to the information on the electricity consumption record to calculate the travelable distance.

There may be a difference in electricity consumption depending on how the user rides on the electric vehicle. According to the navigation system of Configuration 7, a more accurate travelable distance can be calculated by referring to the past electricity consumption record of the user riding on the electric vehicle.

Configuration 8. The navigation system according to the above arrangement is a navigation system (for example, STM2 of FIG. 8) including: a plurality of electric vehicles (for example, 1A and 1B in FIG. 8) respectively having batteries; and a route setting device (for example, NAV of FIG. 8) that searches for a route for guiding the plurality of electric vehicles to a destination to set a travel route. The route setting device (NAV) includes: a storage means (for example, 820 in FIG. 8) for storing group information in which the plurality of electric vehicles are set as one group and pieces of position information of charging stations capable of supplying power to batteries (for example, 12 in FIG. 8) of the plurality of electric vehicles; a determination means (for example, 920 in FIG. 9) for determining whether or not an electric vehicle of which the remaining battery capacity is smallest is capable of arriving at the destination by comparing remaining battery capacities acquired from the plurality of electric vehicles; and a travel guide means (for example, 930 in FIG. 9) for searching the travel route for a charging station (for example, PST in FIG. 8) at which the electric vehicle having the smallest remaining battery capacity is capable of arriving based on the pieces of position information of the charging stations and providing guidance for a route to the destination via the searched charging station when it is determined that it is difficult to arrive at the destination.

According to the navigation system of Configuration 8, it is possible to provide a navigation technique capable of providing guidance for the route to the destination via the charging station at which the electric vehicle having the smallest remaining battery capacity can arrive in the case where the power supply for the battery is necessary in consideration of the remaining battery capacity of each of the vehicles traveling in the group.

Configuration 9. The route setting device according to the above embodiment is a route setting device (for example, NAV of FIG. 8) that searches for a route to guide a plurality of electric vehicles (for example, 1A and 1B in FIG. 8) respectively having batteries to a destination to set a travel route, and includes: a storage means (for example, 820 in FIG. 8) for storing group information in which the plurality of electric vehicles are set as one group and pieces of position information of charging stations capable of supplying power to the batteries of the plurality of electric vehicles; a calculation means (for example, 910 in FIG. 9) for calculating travelable distances of the respective electric vehicle based on remaining battery capacities acquired from the plurality of electric vehicles; a determination means (for example, 920 in FIG. 9) for determining whether or not an electric vehicle having a shortest travelable distance among the plurality of electric vehicles is capable of arriving at the destination by comparing a distance from a current location to the destination with the calculated travelable distances; and a travel guide means (for example, 930 in FIG. 9) for searching the travel route for a charging station (for example, PST in FIG. 8) at which the electric vehicle having the shortest travelable distance is capable of arriving based on the pieces of position information of the charging stations, and providing guidance for a route to the destination via the searched charging station when it is determined that it is difficult to arrive at the destination.

Configuration 10. The route setting method according to the above embodiment is a route setting method in a route setting device that searches for a route to guide a plurality of electric vehicles respectively having batteries to a destination to set a travel route, and includes: a storage step of storing, in a storage means (820), group information in which the plurality of electric vehicles are set as one group and pieces of position information of charging stations capable of supplying power to the batteries of the plurality of electric vehicles; a calculation step (for example, S1420 in FIG. 14) of calculating, by a calculation means (910), a travelable distance of each electric vehicle based on remaining battery capacities acquired from the plurality of electric vehicles; a determination step (for example, S1430 in FIG. 14) of determining, by a determination means (920), whether or not an electric vehicle having a shortest travelable distance among the plurality of electric vehicles is capable of arriving at the destination by comparing a distance from a current location to the destination with the calculated travelable distances; and a travel guide step (for example, S1440 in FIG. 14) of searching, by a travel guide means (930), the travel route for a charging station at which the electric vehicle having the shortest travelable distance is capable of arriving based on the pieces of position information of the charging stations and providing guidance for a route to the destination via the searched charging station when it is determined that it is difficult to arrive at the destination.

Configuration 11. The program according to the above embodiment is a program for causing a computer to execute each step of a route setting method in a route setting device that searches for a route to guide a plurality of electric vehicles respectively having batteries to a destination to set a travel route. The route setting method includes: a storage step of storing, in a storage means (820), group information in which the plurality of electric vehicles are set as one group and pieces of position information of charging stations capable of supplying power to the batteries of the plurality of electric vehicles; a calculation step (for example, S1420 in FIG. 14) of calculating, by a calculation means (910), a travelable distance of each electric vehicle based on remaining battery capacities acquired from the plurality of electric vehicles; a determination step (for example, S1430 in FIG. 14) of determining, by a determination means (920), whether or not an electric vehicle having a shortest travelable distance among the plurality of electric vehicles is capable of arriving at the destination by comparing a distance from a current location to the destination with the calculated travelable distances; and a travel guide step (for example, S1440 in FIG. 14) of searching, by a travel guide means (930), the travel route for a charging station (for example, PST in FIG. 8) at which the electric vehicle having the shortest travelable distance is capable of arriving based on the pieces of position information of the charging stations and providing guidance for a route to the destination via the searched charging station when it is determined that it is difficult to arrive at the destination.

Configuration 12. The storage medium according to the above embodiment is a computer-readable storage medium storing a program for causing a computer to execute each step of a route setting method in a route setting device that searches for a route to guide a plurality of electric vehicles respectively having batteries to a destination to set a travel route. The route setting method includes: a storage step of storing, in a storage means (820), group information in which the plurality of electric vehicles are set as one group and pieces of position information of charging stations capable of supplying power to the batteries of the plurality of electric vehicles; a calculation step (for example, S1420 in FIG. 14) of calculating, by a calculation means (910), a travelable distance of each electric vehicle based on remaining battery capacities acquired from the plurality of electric vehicles; a determination step (for example, S1430 in FIG. 14) of determining, by a determination means (920), whether or not an electric vehicle having a shortest travelable distance among the plurality of electric vehicles is capable of arriving at the destination by comparing a distance from a current location to the destination with the calculated travelable distances; and a travel guide step (for example, S1440 in FIG. 14) of searching, by a travel guide means (930), the travel route for a charging station (for example, PST in FIG. 8) at which the electric vehicle having the shortest travelable distance is capable of arriving based on the pieces of position information of the charging stations and providing guidance for a route to the destination via the searched charging station when it is determined that it is difficult to arrive at the destination.

According to the route setting device of Configuration 9, the route setting method of Configuration 10, the program of Configuration 11, and the storage medium of Configuration 12, it is possible to provide a route setting technique capable of providing guidance for the route to the destination via the charging station at which the electric vehicle having the shortest travelable distance can arrive in the case where the power supply for the battery is necessary in consideration of the remaining battery capacity of each of the vehicles traveling in the group.

Configuration 13. The route setting device according to the above arrangement is a route setting device (for example, NAV of FIG. 8) that searches for a route to guide a plurality of electric vehicles (for example, 1A and 1B in FIG. 8) respectively having batteries to a destination to set a travel route, and includes: a storage means (for example, 820 in FIG. 8) for storing group information in which the plurality of electric vehicles are set as one group and pieces of position information of charging stations capable of supplying power to the batteries of the plurality of electric vehicles; a determination means (for example, 920 in FIG. 9) for determining whether or not an electric vehicle of which the remaining battery capacity is smallest is capable of arriving at the destination by comparing remaining battery capacities acquired from the plurality of electric vehicles; and a travel guide means (for example, 930 in FIG. 9) for searching the travel route for a charging station (for example, PST in FIG. 8) at which the electric vehicle having the smallest remaining battery capacity is capable of arriving based on the pieces of position information of the charging stations and provide guidance for a route to the destination via the searched charging station when it is determined that it is difficult to arrive at the destination.

Configuration 14. The route setting method according to the above arrangement is a route setting method in a route setting device that searches for a route to guide a plurality of electric vehicles respectively having batteries to a destination to set a travel route, and includes: a storage step of storing, in a storage means (820), group information in which the plurality of electric vehicles are set as one group and pieces of position information of charging stations capable of supplying power to the batteries of the plurality of electric vehicles; a determination step (for example, S 1430 in FIG. 14) of determining, by a determination means, whether or not an electric vehicle of which the remaining battery capacity is smallest among the plurality of electric vehicles is capable of arriving at the destination by comparing remaining battery capacities acquired from the plurality of electric vehicles; and a travel guide step (for example, S 1440 in FIG. 14) of searching, by a travel guide means, the travel route for a charging station (for example, PST in FIG. 8) at which the electric vehicle having the smallest remaining battery capacity is capable of arriving based on the pieces of position information of the charging stations and provide guidance for a route to the destination via the searched charging station when it is determined that it is difficult to arrive at the destination.

Configuration 15. The program according to the above arrangement is a program for causing a computer to execute each step of a route setting method in a route setting device that searches for a route to guide a plurality of electric vehicles respectively having batteries to a destination to set a travel route. The route setting method includes: a storage step of storing, in a storage means (820), group information in which the plurality of electric vehicles are set as one group and pieces of position information of charging stations capable of supplying power to the batteries of the plurality of electric vehicles; a determination step (for example, S 1430 in FIG. 14) of determining, by a determination means (920), whether or not an electric vehicle of which the remaining battery capacity is smallest among the plurality of electric vehicles is capable of arriving at the destination by comparing remaining battery capacities acquired from the plurality of electric vehicles; and a travel guide step (for example, S1440 in FIG. 14) of searching, by a travel guide means (930), the travel route for a charging station (for example, PST in FIG. 8) at which the electric vehicle having the smallest remaining battery capacity is capable of arriving based on the pieces of position information of the charging stations and providing guidance for a route to the destination via the searched charging station when it is determined that it is difficult to arrive at the destination.

Configuration 16. The storage medium according to the above arrangement is a computer-readable storage medium storing a program for causing a computer to execute each step of a route setting method in a route setting device that searches for a route to guide a plurality of electric vehicles respectively having batteries to a destination to set a travel route. The route setting method includes: a storage step of storing, in a storage means (820), group information in which the plurality of electric vehicles are set as one group and pieces of position information of charging stations capable of supplying power to the batteries of the plurality of electric vehicles; a determination step (for example, S1430 in FIG. 14) of determining, by a determination means (920), whether or not an electric vehicle of which the remaining battery capacity is smallest among the plurality of electric vehicles is capable of arriving at the destination by comparing remaining battery capacities acquired from the plurality of electric vehicles; and a travel guide step (for example, S 1440 in FIG. 14) of searching, by a travel guide means (930), the travel route for a charging station at which the electric vehicle having the smallest remaining battery capacity is capable of arriving based on the pieces of position information of the charging stations and providing guidance for a route to the destination via the searched charging station when it is determined that it is difficult to arrive at the destination.

According to the route setting device of Configuration 13, the route setting method of Configuration 14, the program of Configuration 15, and the storage medium of Configuration 16, it is possible to provide a route setting technique capable of providing guidance for the route to the destination via the charging station at which the electric vehicle having the smallest remaining battery capacity can arrive in the case where the power supply for the battery is necessary in consideration of the remaining battery capacity of each of the vehicles traveling in the group.

### REFERENCE SIGNS LIST

- 1A, 1B: VEHICLE
- 12: BATTERY
- NAV: ROUTE SETTING DEVICE
- 910: CALCULATION UNIT
- 920: DETERMINATION UNIT
- 930: TRAVEL GUIDE UNIT
- 940: ACQUISITION UNIT

## Claims

1. A route setting device that searches for a route to guide a plurality of electric vehicles (1A, 1B) respectively having batteries to a destination to set a travel route, the route setting device comprising:
a storage means (820) for storing group information in which the plurality of electric vehicles are set as one group, pieces of position information of charging stations (PST) capable of supplying power to the batteries of the plurality of electric vehicles and at least one of weight data of each user (A, B) who rides on the plurality of electric vehicles (1A, 1B) and information on past electricity consumption record of each user;
a calculation means (910) for calculating a travelable distance of each electric vehicle based on remaining battery capacities acquired from the plurality of electric vehicles and at least one of the weight data of each user and the information on past electricity consumption record of each user;
a determination means (920) for determining whether or not an electric vehicle having a shortest travelable distance among the plurality of electric vehicles can arrive at the destination by comparing a distance from the current location to the destination with the shortest travelable distance calculated by the calculation means; and
a travel guide means (930) for searching the travel route for a charging station at which the electric vehicle having the shortest travelable distance is capable of arriving based on the pieces of position information of the charging stations and providing guidance for a route to the destination via the charging station when it is determined by determination process of the determination means that it is difficult for the electric vehicle having the shortest travelable distance to arrive at the destination.

2. A navigation system comprising a plurality of electric vehicles (1A, 1B) respectively having batteries; and a route setting device (NAV) that searches for a route for guiding the plurality of electric vehicles to a destination to set a travel route, wherein the route setting device is a route setting device according to claim 1.

3. The navigation system according to claim 2, wherein
a battery of each of the plurality of vehicles (1A, 1B) is capable of being charged or replaced with a charged battery in the charging station (PST), and the charging station is a battery replacement station where charging of the battery or replacement of the battery is possible,
the route setting device (NAV) further includes
an acquisition means (940) for acquiring power information indicating a number or capacities of replacement batteries charged in each charging station from a plurality of the charging stations arranged on a travel route based on the pieces of position information of the charging stations,
a management means (802) of each of the charging stations transmits the power information of the charging station to the route setting device (NAV) via a network (NT) using a communication interface means (803),
the acquisition means (940) identifies the charging station arranged on the travel route from among the plurality of charging stations based on pieces of the position information of the charging stations, and acquires the power information from the identified charging station, and
the travel guide means (930)
selects, on the travel route, the charging station with the power information exceeding a total number of batteries of the plurality of vehicles or a total remaining capacity of the batteries of the plurality of vehicles, required for the plurality of electric vehicles to arrive at the destination, from the plurality of charging stations and provides guidance for a route passing through the charging station.

4. The navigation system according to claim 2 wherein
a battery of each of the plurality of vehicles (1A, 1B) is capable of being charged or replaced with a charged battery in the charging station, and the charging station is a battery replacement station where charging of the battery or replacement of the battery is possible,
the route setting device (NAV) further includes
an acquisition means (940) for acquiring power information indicating a number or capacities of replacement batteries charged in each charging station from a plurality of the charging stations arranged on a travel route based on the pieces of position information of the charging stations,
a management means (802) of each of the charging stations (PST) transmits the power information of the charging station to the route setting device via a network (NT) using a communication interface means (803),
the acquisition means (940) identifies the charging station arranged on the travel route from among the plurality of charging stations based on pieces of the position information of the charging stations, and acquires the power information from the identified charging station, and
when the power information of each of the plurality of the charging stations is below a total number of batteries or a total remaining capacity of the batteries required for the plurality of electric vehicles to arrive at the destination,
the travel guide means (930)
provides guidance for the route passing through a plurality of charging stations selected such that a sum of pieces of the power information exceeds the total number of the batteries or the total remaining capacity of the batteries.

5. The navigation system according to claim 4, wherein
the travel guide means (930)
provides guidance for a sequence of replacing the batteries in the plurality of selected charging stations (PST) based on a comparison between the travelable distance of each of the electric vehicles (1A, 1B) and a number or capacities of replacement batteries charged in the selected charging stations.

6. The navigation system according to claim 5, wherein the travel guide means (930) sets a higher priority in ascending order of the travelable distance among the plurality of electric vehicles (1A, 1B) and determines a sequence of replacing the batteries.

7. The navigation system according to any one of claims 2 to 6, wherein
the storage means (820) stores group information related to a plurality of the groups as the group information and schedule information, which indicates a power supply schedule in the charging station, for each of the plurality of groups, and
the travel guide means (930) refers to the schedule information to search the travel route for a charging station different from the charging station scheduled for supply to another group, and provides guidance for a route to the destination via the searched charging station.

8. The navigation system according to any one of claims 2 to 7, **characterized in that**
the storage means stores information on a past electricity consumption record of a user riding on each electric vehicle, and
the calculation means refers to the information on the electricity consumption record to calculate the travelable distance.

9. A route setting method in a route setting device that searches for a route to guide a plurality of electric vehicles (1A, 1B) respectively having batteries to a destination to set a travel route, the route setting method comprising:
a storage step of storing, in a storage means (820), group information in which the plurality of electric vehicles (1A, 1B) are set as one group, pieces of position information of charging stations (PST) capable of supplying power to the batteries of the plurality of electric vehicles and at least one of weight data of each user (A, B) who rides on the plurality of electric vehicles and information on past electricity consumption record of each user;
a calculation step of calculating, by a calculation means (910), a travelable distance of each electric vehicle based on remaining battery capacities acquired from the plurality of electric vehicles and at least one of the weight data of each user and the information on past electricity consumption record of each user;
a determination step of determining, by a determination means (920), whether or not an electric vehicle having a shortest travelable distance among the plurality of electric vehicles can arrive at the destination by comparing a distance from the current location to the destination with the shortest travelable distance calculated in the calculation step; and
a travel guide step of searching, by a travel guide means (930), the travel route for a charging station at which the electric vehicle having the shortest travelable distance is capable of arriving based on the pieces of position information of the charging stations and providing guidance for a route to the destination via the searched charging station when it is determined by determination process of the determination means that it is difficult for the electric vehicle having the shortest travelable distance to arrive at the destination.

10. A program for causing a computer to execute each step of a route setting method in a route setting device (NAV) that searches for a route to guide a plurality of electric vehicles (1A, 1B) respectively having batteries to a destination to set a travel route, the program **characterized in that**
the route setting method comprises:
a storage step of storing, in a storage means (820), group information in which the plurality of electric vehicles (1A, 1B) are set as one group, pieces of position information of charging stations (PST) capable of supplying power to the batteries of the plurality of electric vehicles and at least one of weight data of each user (A, B) who rides on the plurality of electric vehicles and information on past electricity consumption record of each user;
a calculation step of calculating, by a calculation means (910), a travelable distance of each electric vehicle based on remaining battery capacities acquired from the plurality of electric vehicles and at least one of the weight data of each user and the information on past electricity consumption record of each user;
a determination step of determining, by a determination means (920), whether or not an electric vehicle having a shortest travelable distance among the plurality of electric vehicles can arrive at the destination by comparing a distance from the current location to the destination with the shortest travelable distance calculated in the calculation step; and
a travel guide step of searching, by a travel guide means (930), the travel route for a charging station at which the electric vehicle having the shortest travelable distance is capable of arriving based on the pieces of position information of the charging stations and providing guidance for a route to the destination via the searched charging station when it is determined by determination process of the determination means that it is difficult for the electric vehicle having the shortest travelable distance to arrive at the destination.

11. A computer-readable storage medium storing a program for causing a computer to execute each step of a route setting method in a route setting device (NAV) that searches for a route to guide a plurality of electric vehicles (1A, 1B) respectively having batteries to a destination to set a travel route, the storage medium **characterized in that**
the route setting method comprises:
a storage step of storing, in a storage means (820), group information in which the plurality of electric vehicles (1A, 1B) are set as one group, pieces of position information of charging stations capable of supplying power to the batteries of the plurality of electric vehicles and at least one of weight data of each user (A, B) who rides on the plurality of electric vehicles and information on past electricity consumption record of each user;
a calculation step of calculating, by a calculation means (910), a travelable distance of each electric vehicle based on remaining battery capacities acquired from the plurality of electric vehicles and at least one of the weight data of each user and the information on past electricity consumption record of each user;
a determination step of determining, by a determination means (920), whether or not an electric vehicle having a shortest travelable distance among the plurality of electric vehicles can arrive at the destination by comparing a distance from the current location to the destination with the shortest travelable distance calculated in the calculation step; and
a travel guide step of searching, by a travel guide means (930), the travel route for a charging station (PST) at which the electric vehicle having the shortest travelable distance is capable of arriving based on the pieces of position information of the charging stations and providing guidance for a route to the destination via the searched charging station when it is determined by determination process of the determination means that it is difficult for the electric vehicle having the shortest travelable distance to arrive at the destination.

## Patentansprüche

1. Routeneinstellungsvorrichtung, die nach einer Route sucht, um eine Vielzahl von Elektrofahrzeugen (1A, 1B), die jeweils Batterien aufweisen, zu einem Zielort zu führen, um eine Fahrtroute einzustellen, wobei die Routeneinstellungsvorrichtung umfasst:
ein Speichermittel (820) zum Speichern von Gruppeninformationen, in denen die Vielzahl von Elektrofahrzeugen als eine Gruppe eingestellt ist, Positionsinformationsstücke von Ladestationen (PST), die die Batterien der Vielzahl von Elektrofahrzeugen mit Leistung versorgen können, und mindestens einem von Gewichtsdaten jedes Benutzers (A, B), der in der Vielzahl von Elektrofahrzeugen (1A, 1B) fährt, und Informationen über einen bisherigen Stromverbrauchsdatensatz jedes Benutzers;
ein Berechnungsmittel (910) zum Berechnen einer zurücklegbaren Strecke jedes Elektrofahrzeugs auf Grundlage von Restbatteriekapazitäten, die von der Vielzahl von Elektrofahrzeugen erfasst wurden, und mindestens einem der Gewichtsdaten jedes Benutzers und der Informationen über einen bisherigen Stromverbrauchsdatensatz jedes Benutzers;
ein Bestimmungsmittel (920) zum Bestimmen, ob ein Elektrofahrzeug, das aus der Vielzahl von Elektrofahrzeugen eine kürzeste zurücklegbare Strecke aufweist, am Zielort ankommen kann oder nicht, durch Vergleichen einer Strecke vom aktuellen Standort zum Zielort mit der vom Berechnungsmittel berechneten kürzesten zurücklegbaren Strecke; und
ein Fahrtführungsmittel (930) zum Durchsuchen der Fahrtroute nach einer Ladestation, an der das Elektrofahrzeug, das die kürzeste zurücklegbare Strecke aufweist, ankommen kann, auf Grundlage der Positionsinformationsstücke der Ladestationen, und Bereitstellen von Führung für eine Route zum Zielort über die Ladestation, wenn durch den Bestimmungsprozess des Bestimmungsmittels bestimmt wird, dass es für das Elektrofahrzeug, das die kürzeste zurücklegbare Strecke aufweist, schwierig ist, am Zielort anzukommen.

2. Navigationssystem, das eine Vielzahl von Elektrofahrzeugen (1A, 1B), die jeweils Batterien aufweisen; und eine Routeneinstellungsvorrichtung (NAV) umfasst, die nach einer Route zum Führen der Vielzahl von Elektrofahrzeugen zu einem Zielort sucht, um eine Fahrtroute einzustellen, wobei die Routeneinstellungsvorrichtung eine Routeneinstellungsvorrichtung nach Anspruch 1 ist.

3. Navigationssystem nach Anspruch 2, wobei
eine Batterie jedes der Vielzahl von Fahrzeugen (1A, 1B) an der Ladestation (PST) geladen oder gegen eine geladene Batterie gewechselt werden kann, und die Ladestation eine Batteriewechselstation ist, an der das Laden der Batterie oder Wechseln der Batterie möglich ist,
die Routeneinstellungsvorrichtung (NAV) weiter beinhaltet
ein Erfassungsmittel (940) zum Erfassen von Leistungsinformationen, die eine Anzahl oder Kapazitäten von Wechselbatterien angeben, die an jeder Ladestation geladen werden, aus einer Vielzahl der Ladestationen, die auf einer Fahrtroute angeordnet sind, auf Grundlage der Positionsinformationsstücke der Ladestationen,
ein Verwaltungsmittel (802) jeder der Ladestationen die Leistungsinformationen der Ladestation unter Verwendung eines Kommunikationsschnittstellenmittels (803) über ein Netzwerk (NT) an die Routeneinstellungsvorrichtung (NAV) überträgt,
das Erfassungsmittel (940) die auf der Fahrtroute angeordnete Ladestation aus der Vielzahl von Ladestationen auf Grundlage der Positionsinformationsstücke der Ladestationen identifiziert und die Leistungsinformationen von der identifizierten Ladestation erfasst, und
das Fahrtführungsmittel (930)
auf der Fahrtroute die Ladestation mit den Leistungsinformationen, die eine Gesamtzahl von Batterien der Vielzahl von Fahrzeugen oder eine Gesamtrestkapazität der Batterien der Vielzahl von Fahrzeugen, die erforderlich ist, damit die Vielzahl von Elektrofahrzeugen am Zielort ankommen, überschreiten, aus der Vielzahl von Ladestationen auswählt und Führung für eine Route bereitstellt, die durch die Ladestation verläuft.

4. Navigationssystem nach Anspruch 2, wobei
eine Batterie jedes der Vielzahl von Fahrzeugen (1A, 1B) an der Ladestation geladen oder gegen eine geladene Batterie gewechselt werden kann, und die Ladestation eine Batteriewechselstation ist, an der das Laden der Batterie oder Wechseln der Batterie möglich ist,
die Routeneinstellungsvorrichtung (NAV) weiter beinhaltet
ein Erfassungsmittel (940) zum Erfassen von Leistungsinformationen, die eine Anzahl oder Kapazitäten von Wechselbatterien angeben, die an jeder Ladestation geladen werden, aus einer Vielzahl der Ladestationen, die auf einer Fahrtroute angeordnet sind, auf Grundlage der Positionsinformationsstücke der Ladestationen,
ein Verwaltungsmittel (802) jeder der Ladestationen (PST) die Leistungsinformationen der Ladestation unter Verwendung eines Kommunikationsschnittstellenmittels (803) über ein Netzwerk (NT) an die Routeneinstellungsvorrichtung überträgt,
das Erfassungsmittel (940) die auf der Fahrtroute angeordnete Ladestation aus der Vielzahl von Ladestationen auf Grundlage der Positionsinformationsstücke der Ladestationen identifiziert und die Leistungsinformationen von der identifizierten Ladestation erfasst, und
wenn die Leistungsinformationen jeder der Vielzahl der Ladestationen unter einer Gesamtzahl von Batterien oder einer Gesamtrestkapazität der Batterien liegen, die erforderlich ist, damit die Vielzahl von Elektrofahrzeugen am Zielort ankommen,
das Fahrtführungsmittel (930)
Führung für die Route, die durch eine Vielzahl von Ladestationen verläuft, bereitstellt, die derart ausgewählt wurde, dass eine Summe der Leistungsinformationsstücke die Gesamtzahl der Batterien oder die Gesamtrestkapazität der Batterien überschreitet.

5. Navigationssystem nach Anspruch 4, wobei
das Fahrtführungsmittel (930)
Führung für eine Wechselsequenz der Batterien in der Vielzahl von ausgewählten Ladestationen (PST) auf Grundlage eines Vergleichs zwischen der zurücklegbaren Strecke jedes der Elektrofahrzeuge (1A, 1B) und einer Anzahl oder Kapazitäten von Wechselbatterien, die in den ausgewählten Ladestationen geladen werden, bereitstellt.

6. Navigationssystem nach Anspruch 5, wobei das Fahrtführungsmittel (930) unter der Vielzahl von Elektrofahrzeugen (1A, 1B) eine höhere Priorität in aufsteigender Reihenfolge der zurücklegbaren Strecke einstellt und eine Wechselsequenz der Batterien bestimmt.

7. Navigationssystem nach einem der Ansprüche 2 bis 6, wobei
das Speichermittel (820) Gruppeninformationen, die sich auf eine Vielzahl der Gruppen beziehen, als die Gruppeninformationen, und Zeitplaninformationen, die einen Zeitplan für die Leistungsversorgung an der Ladestation angeben, für jede der Vielzahl von Gruppen speichert, und
das Fahrtführungsmittel (930) auf die Zeitplaninformationen Bezug nimmt, um die Fahrtroute nach einer Ladestation zu durchsuchen, die sich von der Ladestation unterscheidet, welche zur Versorgung einer anderen Gruppe eingeplant ist, und Führung für eine Route zum Zielort über die gesuchte Ladestation bereitstellt.

8. Navigationssystem nach einem der Ansprüche 2 bis 7, **dadurch gekennzeichnet, dass**
das Speichermittel Informationen über einen bisherigen Stromverbrauchsdatensatz eines Benutzers, der in jedem Elektrofahrzeug fährt, speichert, und
das Berechnungsmittel auf die Informationen über den Stromverbrauchsdatensatz Bezug nimmt, um die zurücklegbare Strecke zu berechnen.

9. Routeneinstellungsverfahren in einer Routeneinstellungsvorrichtung, die nach einer Route sucht, um eine Vielzahl von Elektrofahrzeugen (1A, 1B), die jeweils Batterien aufweisen, zu einem Zielort zu führen, um eine Fahrtroute einzustellen, wobei das Routeneinstellungsverfahren umfasst:
einen Speicherschritt des Speicherns, in einem Speichermittel (820), von Gruppeninformationen, in denen die Vielzahl von Elektrofahrzeugen (1A, 1B) als eine Gruppe eingestellt sind, Positionsinformationsstücke von Ladestationen (PST), die die Batterien der Vielzahl von Elektrofahrzeugen mit Leistung versorgen können, und mindestens einem von Gewichtsdaten jedes Benutzers (A, B), der in der Vielzahl von Elektrofahrzeugen fährt, und Informationen über einen bisherigen Stromverbrauchsdatensatz jedes Benutzers;
einen Berechnungsschritt des Berechnens, durch ein Berechnungsmittel (910), einer zurücklegbaren Strecke jedes Elektrofahrzeugs auf Grundlage von Restbatteriekapazitäten, die von der Vielzahl von Elektrofahrzeugen erfasst wurden, und mindestens einem der Gewichtsdaten jedes Benutzers und der Informationen über einen bisherigen Stromverbrauchsdatensatz jedes Benutzers;
einen Bestimmungsschritt des Bestimmens, durch ein Bestimmungsmittel (920), ob ein Elektrofahrzeug, das aus der Vielzahl von Elektrofahrzeugen eine kürzeste zurücklegbare Strecke aufweist, am Zielort ankommen kann oder nicht, durch Vergleichen einer Strecke vom aktuellen Standort zum Zielort mit der im Berechnungsschritt berechneten kürzesten zurücklegbaren Strecke; und
einen Fahrtführungsschritt des Durchsuchens, durch ein Fahrtführungsmittel (930), der Fahrtroute nach einer Ladestation, an der das Elektrofahrzeug, das die kürzeste zurücklegbare Strecke aufweist, ankommen kann, auf Grundlage der Positionsinformationsstücke der Ladestationen, und Bereitstellens von Führung für eine Route zum Zielort über die gesuchte Ladestation, wenn durch den Bestimmungsprozess des Bestimmungsmittels bestimmt wird, dass es für das Elektrofahrzeug, das die kürzeste zurücklegbare Strecke aufweist, schwierig ist, am Zielort anzukommen.

10. Programm zum Veranlassen eines Computers dazu, jeden Schritt eines Routeneinstellungsverfahrens in einer Routeneinstellungsvorrichtung (NAV) auszuführen, die nach einer Route sucht, um eine Vielzahl von Elektrofahrzeugen (1A, 1B), die jeweils Batterien aufweisen, zu einem Zielort zu führen, um eine Fahrtroute einzustellen, wobei das Programm **dadurch gekennzeichnet ist, dass**
das Routeneinstellungsverfahren umfasst:
einen Speicherschritt des Speicherns, in einem Speichermittel (820), von Gruppeninformationen, in denen die Vielzahl von Elektrofahrzeugen (1A, 1B) als eine Gruppe eingestellt sind, Positionsinformationsstücke von Ladestationen (PST), die die Batterien der Vielzahl von Elektrofahrzeugen mit Leistung versorgen können, und mindestens einem von Gewichtsdaten jedes Benutzers (A, B), der in der Vielzahl von Elektrofahrzeugen fährt, und Informationen über einen bisherigen Stromverbrauchsdatensatz jedes Benutzers;
einen Berechnungsschritt des Berechnens, durch ein Berechnungsmittel (910), einer zurücklegbaren Strecke jedes Elektrofahrzeugs auf Grundlage von Restbatteriekapazitäten, die von der Vielzahl von Elektrofahrzeugen erfasst wurden, und mindestens einem der Gewichtsdaten jedes Benutzers und der Informationen über einen bisherigen Stromverbrauchsdatensatz jedes Benutzers;
einen Bestimmungsschritt des Bestimmens, durch ein Bestimmungsmittel (920), ob ein Elektrofahrzeug, das aus der Vielzahl von Elektrofahrzeugen eine kürzeste zurücklegbare Strecke aufweist, am Zielort ankommen kann oder nicht, durch Vergleichen einer Strecke vom aktuellen Standort zum Zielort mit der im Berechnungsschritt berechneten kürzesten zurücklegbaren Strecke; und
einen Fahrtführungsschritt des Durchsuchens, durch ein Fahrtführungsmittel (930), der Fahrtroute nach einer Ladestation, an der das Elektrofahrzeug, das die kürzeste zurücklegbare Strecke aufweist, ankommen kann, auf Grundlage der Positionsinformationsstücke der Ladestationen, und Bereitstellens von Führung für eine Route zum Zielort über die gesuchte Ladestation, wenn durch den Bestimmungsprozess des Bestimmungsmittels bestimmt wird, dass es für das Elektrofahrzeug, das die kürzeste zurücklegbare Strecke aufweist, schwierig ist, am Zielort anzukommen.

11. Computerlesbares Speichermedium, das ein Programm speichert, zum Veranlassen eines Computers dazu, jeden Schritt eines Routeneinstellungsverfahrens in einer Routeneinstellungsvorrichtung (NAV) auszuführen, die nach einer Route sucht, um eine Vielzahl von Elektrofahrzeugen (1A, 1B), die jeweils Batterien aufweisen, zu einem Zielort zu führen, um eine Fahrtroute einzustellen, wobei das Speichermedium **dadurch gekennzeichnet ist, dass**
das Routeneinstellungsverfahren umfasst:
einen Speicherschritt des Speicherns, in einem Speichermittel (820), von Gruppeninformationen, in denen die Vielzahl von Elektrofahrzeugen (1A, 1B) als eine Gruppe eingestellt sind, Positionsinformationsstücke von Ladestationen, die die Batterien der Vielzahl von Elektrofahrzeugen mit Leistung versorgen können, und mindestens einem von Gewichtsdaten jedes Benutzers (A, B), der in der Vielzahl von Elektrofahrzeugen fährt, und Informationen über einen bisherigen Stromverbrauchsdatensatz jedes Benutzers;
einen Berechnungsschritt des Berechnens, durch ein Berechnungsmittel (910), einer zurücklegbaren Strecke jedes Elektrofahrzeugs auf Grundlage von Restbatteriekapazitäten, die von der Vielzahl von Elektrofahrzeugen erfasst wurden, und mindestens einem der Gewichtsdaten jedes Benutzers und der Informationen über einen bisherigen Stromverbrauchsdatensatz jedes Benutzers;
einen Bestimmungsschritt des Bestimmens, durch ein Bestimmungsmittel (920), ob ein Elektrofahrzeug, das aus der Vielzahl von Elektrofahrzeugen eine kürzeste zurücklegbare Strecke aufweist, am Zielort ankommen kann oder nicht, durch Vergleichen einer Strecke vom aktuellen Standort zum Zielort mit der im Berechnungsschritt berechneten kürzesten zurücklegbaren Strecke; und
einen Fahrtführungsschritt des Durchsuchens, durch ein Fahrtführungsmittel (930), der Fahrtroute nach einer Ladestation (PST), an der das Elektrofahrzeug, das die kürzeste zurücklegbare Strecke aufweist, ankommen kann, auf Grundlage der Positionsinformationsstücke der Ladestationen, und Bereitstellens von Führung für eine Route zum Zielort über die gesuchte Ladestation, wenn durch den Bestimmungsprozess des Bestimmungsmittels bestimmt wird, dass es für das Elektrofahrzeug, das die kürzeste zurücklegbare Strecke aufweist, schwierig ist, am Zielort anzukommen.

## Revendications

1. Dispositif d'établissement d'itinéraire qui recherche un itinéraire pour guider une pluralité de véhicules électriques (1A, 1B) présentant respectivement des batteries vers une destination pour établir un itinéraire de déplacement, le dispositif d'établissement d'itinéraire comprenant :
un moyen de stockage (820) pour stocker des informations de groupe dans lesquelles la pluralité de véhicules électriques sont définis comme un seul groupe, des éléments d'informations de position de stations de charge (PST) capables de fournir de l'énergie aux batteries de la pluralité de véhicules électriques et au moins un élément parmi des données de poids de chaque utilisateur (A, B) à bord de la pluralité de véhicules électriques (1A, 1B) et des informations concernant l'enregistrement de consommation électrique passée de chaque utilisateur ;
un moyen de calcul (910) pour calculer une distance parcourable de chaque véhicule électrique sur la base des capacités de batterie restantes acquises à partir de la pluralité de véhicules électriques et d'au moins un élément parmi les données de poids de chaque utilisateur et les informations concernant l'enregistrement de consommation électrique passée de chaque utilisateur ;
un moyen de détermination (920) pour déterminer si un véhicule électrique présentant la distance parcourable la plus courte parmi la pluralité de véhicules électriques peut arriver ou non à la destination en comparant une distance de l'emplacement actuel à la destination avec la distance parcourable la plus courte calculée par le moyen de calcul ; et
un moyen de guidage de déplacement (930) pour rechercher l'itinéraire de déplacement pour atteindre une station de charge à laquelle le véhicule électrique présentant la distance parcourable la plus courte est capable d'arriver sur la base des éléments d'informations de position des stations de charge et fournir un guidage pour un itinéraire vers la destination via la station de charge, lorsqu'il est déterminé par un processus de détermination du moyen de détermination qu'il est difficile pour le véhicule électrique présentant la distance parcourable la plus courte d'arriver à la destination.

2. Système de navigation comprenant une pluralité de véhicules électriques (1A, 1B) présentant respectivement des batteries ; et un dispositif d'établissement d'itinéraire (NAV) qui recherche un itinéraire pour guider la pluralité de véhicules électriques vers une destination pour établir un itinéraire de déplacement, dans lequel le dispositif d'établissement d'itinéraire est un dispositif d'établissement d'itinéraire selon la revendication 1.

3. Système de navigation selon la revendication 2, dans lequel
une batterie de chacun de la pluralité de véhicules (1A, 1B) peut être chargée ou remplacée par une batterie chargée dans la station de charge (PST), et la station de charge est une station de remplacement de batterie où la charge de la batterie ou le remplacement de la batterie est possible,
le dispositif d'établissement d'itinéraire (NAV) inclut en outre
un moyen d'acquisition (940) pour acquérir des informations d'alimentation indiquant un nombre ou des capacités de batteries de remplacement chargées dans chaque station de charge à partir d'une pluralité de stations de charge situées sur un itinéraire de déplacement sur la base des éléments d'informations de position des stations de charge,
un moyen de gestion (802) de chacune des stations de charge transmet les informations d'alimentation de la station de charge au dispositif d'établissement d'itinéraire (NAV) via un réseau (NT) en utilisant un moyen d'interface de communication (803),
le moyen d'acquisition (940) identifie la station de charge située sur l'itinéraire de déplacement parmi la pluralité de stations de charge sur la base d'éléments d'informations de position des stations de charge, et acquiert les informations d'alimentation provenant de la station de charge identifiée, et
le moyen de guidage de déplacement (930)
sélectionne, sur l'itinéraire de déplacement, la station de charge avec les informations d'alimentation dépassant un nombre total de batteries de la pluralité de véhicules ou une capacité totale restante des batteries de la pluralité de véhicules, requise pour que la pluralité de véhicules électriques arrivent à la destination, à partir de la pluralité de stations de charge et fournit un guidage pour un itinéraire passant par la station de charge.

4. Système de navigation selon la revendication 2 dans lequel
une batterie de chacun de la pluralité de véhicules (1A, 1B) peut être chargée ou remplacée par une batterie chargée dans la station de charge, et la station de charge est une station de remplacement de batterie où la charge de la batterie ou le remplacement de la batterie est possible,
le dispositif d'établissement d'itinéraire (NAV) inclut en outre
un moyen d'acquisition (940) pour acquérir des informations d'alimentation indiquant un nombre ou des capacités de batteries de remplacement chargées dans chaque station de charge à partir d'une pluralité de stations de charge situées sur un itinéraire de déplacement sur la base des éléments d'informations de position des stations de charge,
un moyen de gestion (802) de chacune des stations de charge (PST) transmet les informations d'alimentation de la station de charge au dispositif d'établissement d'itinéraire via un réseau (NT) en utilisant un moyen d'interface de communication (803),
le moyen d'acquisition (940) identifie la station de charge située sur l'itinéraire de déplacement parmi la pluralité de stations de charge sur la base d'éléments d'informations de position des stations de charge, et acquiert les informations d'alimentation provenant de la station de charge identifiée, et
lorsque les informations d'alimentation de chacune de la pluralité de stations de charge sont inférieures à un nombre total de batteries ou à une capacité restante totale des batteries requise pour que la pluralité de véhicules électriques arrivent à la destination,
le moyen de guidage de déplacement (930)
fournit un guidage pour l'itinéraire passant par une pluralité de stations de charge sélectionnées de telle sorte qu'une somme d'éléments d'informations d'alimentation dépasse le nombre total de batteries ou la capacité totale restante des batteries.

5. Système de navigation selon la revendication 4, dans lequel
le moyen de guidage de déplacement (930)
fournit un guidage pour une séquence de remplacement des batteries dans la pluralité de stations de charge sélectionnées (PST) sur la base d'une comparaison entre la distance parcourable de chacun des véhicules électriques (1A, 1B) et un nombre ou des capacités de batteries de remplacement chargées dans les stations de charge sélectionnées.

6. Système de navigation selon la revendication 5, dans lequel le moyen de guidage de déplacement (930) définit une priorité plus élevée dans l'ordre croissant de la distance parcourable parmi la pluralité de véhicules électriques (1A, 1B) et détermine une séquence de remplacement des batteries.

7. Système de navigation selon l'une quelconque des revendications 2 à 6, dans lequel
le moyen de stockage (820) stocke des informations de groupe liées à une pluralité des groupes en tant qu'informations de groupe et informations horaires, qui indiquent un horaire d'alimentation électrique dans la station de charge, pour chacun de la pluralité de groupes, et
le moyen de guidage de déplacement (930) se réfère aux informations horaires pour rechercher l'itinéraire de déplacement pour atteindre une station de charge différente de la station de charge prévue pour alimenter un autre groupe, et fournit un guidage pour un itinéraire vers la destination via la station de charge recherchée.

8. Système de navigation selon l'une quelconque des revendications 2 à 7, **caractérisé en ce que**
le moyen de stockage stocke des informations concernant un enregistrement de consommation électrique passée d'un utilisateur à bord de chaque véhicule électrique, et
le moyen de calcul se réfère aux informations concernant l'enregistrement de consommation électrique pour calculer la distance parcourable.

9. Procédé d'établissement d'itinéraire dans un dispositif d'établissement d'itinéraire qui recherche un itinéraire pour guider une pluralité de véhicules électriques (1A, 1B) présentant respectivement des batteries vers une destination pour établir un itinéraire de déplacement, le procédé d'établissement d'itinéraire comprenant :
une étape de stockage consistant à stocker, dans un moyen de stockage (820), des informations de groupe dans lesquelles la pluralité de véhicules électriques (1A, 1B) sont définis comme un seul groupe, des éléments d'informations de position de stations de charge (PST) capables de fournir de l'énergie aux batteries de la pluralité de véhicules électriques et au moins un élément parmi des données de poids de chaque utilisateur (A, B) à bord de la pluralité de véhicules électriques et des informations concernant l'enregistrement de consommation électrique passée de chaque utilisateur ;
une étape de calcul consistant à calculer, par un moyen de calcul (910), une distance parcourable de chaque véhicule électrique sur la base des capacités de batterie restantes acquises à partir de la pluralité de véhicules électriques et d'au moins un élément parmi les données de poids de chaque utilisateur et les informations concernant l'enregistrement de consommation électrique passée de chaque utilisateur ;
une étape de détermination consistant à déterminer, par un moyen de détermination (920), si un véhicule électrique présentant la distance parcourable la plus courte parmi la pluralité de véhicules électriques peut arriver ou non à la destination en comparant une distance de l'emplacement actuel à la destination avec la distance parcourable la plus courte calculée à l'étape de calcul ; et
une étape de guidage de déplacement consistant à rechercher, par un moyen de guidage de déplacement (930), l'itinéraire de déplacement pour atteindre une station de charge au niveau de laquelle le véhicule électrique présentant la distance parcourable la plus courte est capable d'arriver sur la base des éléments d'informations de position des stations de charge et à fournir le guidage pour un itinéraire vers la destination via la station de charge recherchée, lorsqu'il est déterminé par un processus de détermination du moyen de détermination qu'il est difficile pour le véhicule électrique présentant la distance parcourable la plus courte d'arriver à la destination.

10. Programme pour amener un ordinateur à exécuter chaque étape d'un procédé d'établissement d'itinéraire dans un dispositif d'établissement d'itinéraire (NAV) qui recherche un itinéraire pour guider une pluralité de véhicules électriques (1A, 1B) présentant respectivement des batteries vers une destination pour établir un itinéraire de déplacement, le programme étant **caractérisé en ce que**
le procédé d'établissement d'itinéraire comprend :
une étape de stockage consistant à stocker, dans un moyen de stockage (820), des informations de groupe dans lesquelles la pluralité de véhicules électriques (1A, 1B) sont définis comme un seul groupe, des éléments d'informations de position de stations de charge (PST) capables de fournir de l'énergie aux batteries de la pluralité de véhicules électriques et au moins un élément parmi des données de poids de chaque utilisateur (A, B) à bord de la pluralité de véhicules électriques et des informations concernant l'enregistrement de consommation électrique passée de chaque utilisateur ;
une étape de calcul consistant à calculer, par un moyen de calcul (910), une distance parcourable de chaque véhicule électrique sur la base des capacités de batterie restantes acquises à partir de la pluralité de véhicules électriques et d'au moins un élément parmi les données de poids de chaque utilisateur et les informations concernant l'enregistrement de consommation électrique passée de chaque utilisateur ;
une étape de détermination consistant à déterminer, par un moyen de détermination (920), si un véhicule électrique présentant la distance parcourable la plus courte parmi la pluralité de véhicules électriques peut arriver ou non à la destination en comparant une distance de l'emplacement actuel à la destination avec la distance parcourable la plus courte calculée à l'étape de calcul ; et
une étape de guidage de déplacement consistant à rechercher, par un moyen de guidage de déplacement (930), l'itinéraire de déplacement pour atteindre une station de charge au niveau de laquelle le véhicule électrique présentant la distance parcourable la plus courte est capable d'arriver sur la base des éléments d'informations de position des stations de charge et à fournir le guidage pour un itinéraire vers la destination via la station de charge recherchée, lorsqu'il est déterminé par un processus de détermination du moyen de détermination qu'il est difficile pour le véhicule électrique présentant la distance parcourable la plus courte d'arriver à la destination.

11. Support de stockage lisible par ordinateur stockant un programme pour amener un ordinateur à exécuter chaque étape d'un procédé d'établissement d'itinéraire dans un dispositif d'établissement d'itinéraire (NAV) qui recherche un itinéraire pour guider une pluralité de véhicules électriques (1A, 1B) présentant respectivement des batteries vers une destination pour établir un itinéraire de déplacement, le support de stockage étant **caractérisé en ce que**
le procédé d'établissement d'itinéraire comprend :
une étape de stockage consistant à stocker, dans un moyen de stockage (820), des informations de groupe dans lesquelles la pluralité de véhicules électriques (1A, 1B) sont définis comme un seul groupe, des éléments d'informations de position de stations de charge capables de fournir de l'énergie aux batteries de la pluralité de véhicules électriques et au moins un élément parmi des données de poids de chaque utilisateur (A, B) à bord de la pluralité de véhicules électriques et des informations concernant l'enregistrement de consommation électrique passée de chaque utilisateur ;
une étape de calcul consistant à calculer, par un moyen de calcul (910), une distance parcourable de chaque véhicule électrique sur la base des capacités de batterie restantes acquises à partir de la pluralité de véhicules électriques et d'au moins un élément parmi les données de poids de chaque utilisateur et les informations concernant l'enregistrement de consommation électrique passée de chaque utilisateur ;
une étape de détermination consistant à déterminer, par un moyen de détermination (920), si un véhicule électrique présentant la distance parcourable la plus courte parmi la pluralité de véhicules électriques peut arriver ou non à la destination en comparant une distance de l'emplacement actuel à la destination avec la distance parcourable la plus courte calculée à l'étape de calcul ; et
une étape de guidage de déplacement consistant à rechercher, par un moyen de guidage de déplacement (930), l'itinéraire de déplacement pour atteindre une station de charge (PST) à laquelle le véhicule électrique présentant la distance parcourable la plus courte est capable d'arriver sur la base des éléments d'informations de position des stations de charge et à fournir le guidage pour un itinéraire vers la destination via la station de charge recherchée, lorsqu'il est déterminé par un processus de détermination du moyen de détermination qu'il est difficile pour le véhicule électrique présentant la distance parcourable la plus courte d'arriver à la destination.
